(19) **Europäisches Patentamt / European Patent Office / Office européen des brevets**

(11) **EP 2 708 513 B1**

(12) **EUROPEAN PATENT SPECIFICATION**

(45) Date of publication and mention
of the grant of the patent:
**15.10.2014 Bulletin 2014/42**

(51) Int Cl.:
**C01G 23/00** *(2006.01)*    **C09C 1/36** *(2006.01)*
**G02B 1/10** *(2006.01)*

(21) Application number: **13177006.7**

(22) Date of filing: **18.07.2013**

(54) **Core/shell type tetragonal titanium oxide particle water dispersion, making method, uv-shielding silicone coating composition and coated article**

Tetragonale Titanoxidpartikel-Kern-/Hüllen-Wasserdispersion, Herstellungsverfahren, UV-abschirmende Silikonbeschichtungszusammensetzung und beschichteter Artikel

Dispersion d'eau de particules d'oxyde de titane tétragonal de type noyau/enveloppe, procédé de fabrication, composition de revêtement de silicone de protection contre les rayons UV et article revêtu

(84) Designated Contracting States:
**DE FR GB**

(30) Priority: **19.07.2012 JP 2012160347**

(43) Date of publication of application:
**19.03.2014 Bulletin 2014/12**

(73) Proprietor: **Shin-Etsu Chemical Co., Ltd.**
**Chiyoda-ku,**
**Tokyo (JP)**

(72) Inventors:
• **Masuda, Kohei**
**Annaka-shi, Gunma (JP)**
• **Higuchi, Koichi**
**Annaka-shi, Gunma (JP)**
• **Komori, Hisatoshi**
**Annaka-shi, Gunma (JP)**
• **Furudate, Manabu**
**Kamisu-shi, Ibaraki (JP)**
• **Inoue, Tomohiro**
**Kamisu-shi, Ibaraki (JP)**
• **Eguchi, Yoshitsugu**
**Kamisu-shi, Ibaraki (JP)**

(74) Representative: **Stoner, Gerard Patrick et al**
**Mewburn Ellis LLP**
**33 Gutter Lane**
**London**
**EC2V 8AS (GB)**

(56) References cited:
**US-A1- 2006 039 875**    **US-A1- 2011 076 484**
**US-B2- 8 158 270**

• **MASANORI HIRANO ET AL: "Hydrothermal Synthesis of Rutile-Type Complete Solid Solution Nanoparticles in the TiO 2 -SnO 2 System under Acidic Conditions", JOURNAL OF THE AMERICAN CERAMIC SOCIETY, vol. 94, no. 10, 25 October 2011 (2011-10-25), pages 3319-3326, XP55100871, ISSN: 0002-7820, DOI: 10.1111/j. 1551-2916.2011.04598.x**
• **RUBY CHAUHAN ET AL: "Structural and photocatalytic studies of Mn doped TiO2 nanoparticles", SPECTROCHIMICA ACTA PART A: MOLECULAR AND BIOMOLECULAR SPECTROSCOPY, vol. 98, 1 December 2012 (2012-12-01), pages 256-264, XP55100872, ISSN: 1386-1425, DOI: 10.1016/j.saa.2012.08.009**

**Description**

TECHNICAL FIELD

This invention relates to a core/shell type tetragonal titanium oxide particle water dispersion, a method of preparing the water dispersion, a UV-shielding silicone coating composition comprising the water dispersion, and an article coated with the composition. More particularly, it relates to a water dispersion of core/shell type tetragonal titanium oxide particles consisting of a nanosized core of tetragonal titanium oxide having tin and manganese incorporated in solid solution and a shell of silicon oxide; a method of preparing the water dispersion capable of controlling the thickness of the silicon oxide shell without a need for pulverizing and sifting steps; a UV-shielding silicone coating composition or hardcoat composition comprising the water dispersion, capable of forming a cured film meeting weather resistance and UV-shielding capability at no sacrifice of aesthetic appearance, and having transparency, mar resistance and adhesion; and an article coated with a cured film of the composition.

BACKGROUND

Liquid dispersions containing fine particles of titanium oxide are well known as additive to compositions for endowing them with desired physical properties, for example, imparting UV-shielding ability or adjusting surface refractive index. They are widely utilized in various fields including coating, hardcoat, cosmetic and other compositions.

Since UV shielding and refractive index adjustment are control of optical properties, the particle size of titanium oxide fine particles is desirably equal to or less than the wavelength of light of interest. In particular, a particle size of 100 nm or less is desired for absorbing only the UV band and suppressing visible light from scattering.

Titanium oxide is known to have photocatalytic activity. As the particle size of titanium oxide particles becomes smaller, the specific surface area per unit weight increases, and hence, titanium oxide increases its photocatalytic activity. Since titanium oxide with increased photocatalytic activity promotes photo-decomposition of a binder resin in a composition, the composition has poor weather resistance.

In the prior art, attempts are made to add titanium oxide to coating compositions to impart UV-shielding capability thereto. The cured films are insufficient in weather resistance. With respect to metal oxide fine particles, for example, Patent Document 1 discloses anatase-type titanium oxide nanoparticles. Patent Documents 2, 3 and 4 disclose rutile-type titanium oxide nanoparticles. Coating compositions containing these particles can form films for shielding UV while maintaining visible light transmittance and mar resistance. However, since titanium oxide nanoparticles have photocatalytic activity, the compositions have poor weather resistance. The photocatalytic.activity cannot be completely suppressed even when particles are surface coated with silicon compounds or the like. Then cracks form in coatings of the compositions at a relatively early stage in a long-term accelerated weathering test.

One known technique to solve the problem of poor weather resistance is by doping titanium oxide with a hetero element to suppress its photocatalytic activity. Patent Document 5 discloses doping of titanium oxide with manganese. A dispersion of titanium oxide/manganese composite having no photocatalytic activity is available. However, titanium oxide formed by this method is amorphous or of anatase type and thus inferior in UV absorbing capacity to the rutile type.

Non-Patent Document 1 reports an attempt to suppress the photocatalytic activity of titanium oxide by contacting rutile type titanium oxide at its surface with manganese oxide. Although this technique is expected to utilize the high UV absorbing capacity of rutile-type titanium oxide, manganese is not incorporated in titania as solid solution. Since manganese oxide particles prepared by the technique described therein (Non-Patent Document 2) have a particle size of about 450 nm at maximum, it is not expected that the coating composition is transparent.

Patent Document 6 describes rutile-type titanium oxide nanoparticles having manganese incorporated as solid solution and a method of preparing the same. With this method, titanium hydroxide is surface coated with manganese hydroxide and fired to thereby incorporate manganese into rutile-type titanium oxide as solid solution. The solid solution formed by this method is a binary solid solution consisting of manganese oxide and titanium oxide having a propensity to sinter. It is described that if silicon and aluminum elements are used as anti-sintering agent, titanium oxide is obtainable in nanoparticle form. However, milling is performed in Examples, indicating that the transparency in the visible range of titanium oxide obtained with this method largely depends on the pulverizing and dispersing steps. While a dispersant is generally necessary for dispersion, it often adversely affects a coating composition. Such titanium oxide particles lack versatility when applied to coating compositions.

Patent Document 7 discloses a method for preparing a titanium oxide nanoparticle water dispersion from peroxotitanic acid. By this method, a dispersion of crystalline titanium oxide nanoparticles having transparency in the visible region can be prepared. The dispersion will find a wide variety of applications including coating compositions since it is free of any dispersant except ammonia. However, the resultant titanium oxide is of anatase type having a high photocatalytic activity.

In Patent Document 8, a sol of rutile type titanium oxide is prepared by heating peroxotitanic acid in the presence of tin. However, the resultant titanium oxide has photocatalytic activity. Although the solid solution range of tin is described, a solid solution of another element is referred to nowhere.

Patent Document 10 discloses that nanoparticles are prepared by evaporating metallic titanium in DC arc plasma into an inorganic reactive vapor, and cooling the vapor to deposit inorganic oxide nanoparticles, while doping the nanoparticles with a hetero-element such as cobalt or tin. The resultant nanoparticles are added to a hardcoat composition. In preparing UV-shielding inorganic nanoparticles, this method needs an extreme reaction environment like high temperature and high vacuum. Establishment of such an environment consumes a vast quantity of energy and is disadvantageous in the industry. The method requires a dispersant for achieving a uniform dispersion of nanoparticles like Patent Document 6, which can adversely affect the hardness and adhesion of a coating composition.

In addition to the doping of hetero-elements, another technology of suppressing the photocatalytic activity of titanium oxide is known in the art, which uses titanium oxide of core/shell type. The core/shell type titanium oxide is obtained by forming a shell on the surface of a titanium oxide core from an inorganic oxide such as silicon oxide, aluminum oxide, tin oxide or mullite. This suppresses photocatalytic reaction on the shell surface while maintaining the UV absorbing capacity of titanium oxide core. The core/shell type titanium oxide not only suppresses photocatalytic activity, but also controls the isoelectric point on the particle surface. Then a stable dispersion of such particles in a composition can be formed. When core/shell type titanium oxide is applied to silicone-based coating or hardcoat compositions, it is difficult to alter the pH of the coating composition to fall in the stable dispersion region of titanium oxide, because the pH range where silanol groups remain stable is limited to a weakly acidic range.

Patent Document 10 discloses surface coverage of titanium oxide nanoparticles having a size of less than 100 nm with a silica layer, and a dispersion of such coated nanoparticles. The silica coating step must be followed by a pulverizing step. The pulverizing step not only consumes great energy, but also is undesirable in material efficiency because in a subsequent sifting step, an unnecessary size fraction must be pulverized again or discarded. This is disadvantageous in the industry.

Patent Documents 11 and 12 and Non-Patent Document 2 describe techniques of forming silicon oxide shells on titanium oxide or zinc oxide cores using microwave irradiation. With these techniques, a core/shell type titanium oxide dispersion is prepared by rapidly heating via microwave irradiation, for coating cores with silicon oxide of nano order. These techniques enable coating with silicon oxide shells of nano order, but are not intended for precise control of particle size. Thus, the dispersions are found hazy in the visible region as demonstrated by a light transmittance of about 70% at wavelength 550 nm. Post-treatment steps such as pulverizing and sifting must be taken before such a titanium oxide dispersion can be effectively applied to hardcoat and similar compositions. These techniques raise a problem of production efficiency like Patent Document 10.

When a titanium oxide dispersion serves for light shielding, the shielding principle differs greatly between the UV region and the visible region. The light shielding in the UV region is light absorption based on electronic transition in titanium oxide from the valence band to the conduction band, whereas the light shielding in the visible region is mainly attributable to light scattering by titanium oxide particles. To control light scattering, the particle size of core/shell type titanium oxide must be precisely controlled. On the assumption that light scattering by core/shell type titanium oxide in water conforms to Rayleigh scattering, the scattering intensity is in proportion to the sixth power of a particle size. Then precise control of the particle size is important since optical properties are largely affected thereby.

In Non-Patent Document 3, zinc oxide which is a UV-shielding agent equivalent to titanium oxide is coated with silica by microwave irradiation. A silica layer of 1 to 3 nm thick is formed on zinc oxide. While the technique has solved the problem of haze in the visible region, it must be compatible with sufficient blockage of photocatalytic activity. Although the technique is allegedly effective for suppressing photocatalytic activity, some photocatalytic activity is left in fact. For achieving further blockage of photocatalytic activity with this technique, the silica layer must be tightly formed to a thickness which does not sacrifice transparency. However, since the sol-gel reaction utilizing microwave irradiation is highly reactive, it is believed difficult to precisely control the particle size. As long as the inventors have investigated, the technique of coating zinc oxide with silica via the sol-gel reaction utilizing microwave irradiation is not acknowledged of its ability to precisely control the particle size.

The reason why it has been impossible to precisely control the size of particles in forming silicon oxide shells is that in the case of reaction using a titanium oxide nanoparticle dispersion, it is difficult to search for reaction conditions. The titanium oxide nanoparticle dispersion typically contains a dispersant for maintaining the dispersed state. Although the dispersant is selected optimum for a particular solvent or liquid, it is not necessarily optimum under reaction conditions. As described in Non-Patent Document 4, it is known that reactivity in sol-gel reaction depends on the reaction medium. If this knowledge is applied to a titanium oxide nanoparticle dispersion, agglomerates of dispersed particles often form, failing to attain the purpose of reaction. Even when no agglomerates form, it is difficult to tightly form silicon oxide shells by any of the foregoing techniques because nanoparticles are surface covered with the dispersant. Further, since the density of titanol on titanium oxide surface varies depending on the type of element incorporated as solid solution in titanium oxide cores, the reaction efficiency during formation of silicon oxide shells differs. Accordingly, for the preparation of a crystalline core/shell type titanium oxide solid-solution particles having transparency, but not photocatalytic activity, a special knowledge capable of high-level investigation on every item of titanium oxide solid-solution core nanoparticles, dispersant, solid-solution element, and reaction solvent is required.

Although a variety of approaches are made for improvements in the titanium oxide nanoparticle dispersion as UV screener, as discussed above, no inorganic UV screeners are advantageously applicable to coating compositions. That is, inorganic UV screeners which are used in coating compositions for forming cured coatings which exhibit mar resistance and UV shielding while maintaining transparency to visible light, and which have weather resistance and durability sufficient to withstand long-term outdoor exposure are not available.

It is desired to have an inorganic UV screener which meets five requirements (weather resistance, UV shielding, transparency, mar resistance and durable adhesion) when it is used to formulate a hardcoat composition, and a method of preparing the same in an economical manner. To meet these five requirements, we have noted that basically the following three issues must be addressed.

In order for a hardcoat composition to exhibit weather resistance, the inorganic UV screener must be deactivated or deprived of its photocatalytic activity. On the other hand, in order for a hardcoat composition to achieve UV shielding, the inorganic UV screener must have a definite band structure in the UV region, that is, be highly crystalline. However, the photocatalytic activity is higher as more light is absorbed. Heretofore, the inorganic UV screener which overcomes a combination of contradictory properties and which can be applied to a hardcoat composition is not known.

In order for a hardcoat composition to exhibit UV shielding, the inorganic UV screener must also remain stable at a high concentration in the composition. Typically, a polymeric dispersant is used to impart dispersion stability. On the other hand, in order for a hardcoat composition to form a coating having mar resistance and adhesion to the substrate, it is necessary that the inorganic UV screener be tightly crosslinked with a binder resin so that the UV screener may not bleed out of the composition. However, the polymeric dispersant functions as an inhibitor against the tight crosslinking of the UV screener with the binder resin. Accordingly, the inorganic UV screener must be kept effectively dispersed in a composition without a need for polymeric dispersant, but no such screeners are available.

In order for a hardcoat composition to form a cured film having transparency, the inorganic UV screener must have a particle size equal to or less than 50 nm. To form a cured film having transparency, the inorganic UV screener must also have a shell having an isoelectric point compatible with the liquid of the hardcoat composition, that is, be of core/shell type. To insure transparency, it is desired that the inorganic UV screener have a particle size equal to or less than 50 nm even after a coating layer is formed for adjusting the isoelectric point. For the preparation of an inorganic UV screener with the advantages of economy and material efficiency, the inclusion of pulverizing and sifting steps in the process causes inefficiency. This suggests that the step of forming a coating layer for adjusting the isoelectric point should also be effective for controlling the thickness of the coating layer. However, the means of controlling the thickness of a coating layer at a precision level sufficient to eliminate pulverizing and sifting steps is not known. In particular, solid solution component to be incorporated in the core of core/shell type particles, type of reactant, type and amount of reaction solvent are not known.

Citation List

| Patent Document 1: | JP-A 2004-238418 |
| Patent Document 2: | JP 2783417 |
| Patent Document 3: | JP-A H11-310755 |
| Patent Document 4: | JP-A 2000-204301 |
| Patent Document 5: | JP 4398869 (USP 8158270) |
| Patent Document 6: | JP-A 2003-327431 |
| Patent Document 7: | JP-A H10-067516 |
| Patent Document 8: | JP 2783417 |
| Patent Document 9: | JP-A 2012-077267 |
| Patent Document 10: | JP 4836232 |
| Patent Document 11: | JP-A 2008-280465 |
| Patent Document 12: | WO 2009/148097 |
| Non-Patent Document 1: | Science in China Series B: Chemistry, 51, 2, 179-185 (2008) |
| Non-Patent Document 2: | Electrichimica Acta, 26, 435-443 (1981) |
| Non-Patent Document 3: | Material Technology, 28, 5, 244-251 (2010) |
| Non-Patent Document 4: | Journal of Materials Research, 25, 5, 890-898 (2010) |

THE INVENTION

An object of the invention is to provide a water dispersion of core/shell type tetragonal titanium oxide solid-solution particles consisting of a nanosized core of tetragonal titanium oxide having tin and manganese incorporated in solid solution and a shell of silicon oxide around the core; a method for preparing the water dispersion which can control the thickness of silicon oxide shells without a need for pulverizing and sifting steps; a UV-shielding silicone coating composition (or hardcoat composition) comprising the water dispersion, for forming a cured film which exhibits both weather resistance and UV-shielding capability without detracting from aesthetic appearance, and possesses transparency, mar resistance and durable adhesion; the use of the composition for forming a coated article; an article coated with a cured film of the composition; and the use of the dispersion or particles in preparation of such compositions and coated articles.

The inventors have discovered the following four phenomena (1) to (4).

(1) When peroxotitanate is heated in the co-presence of tin ion, manganese ion and ammonia, a dispersion of tetragonal titanium oxide nanoparticles having manganese and tin incorporated in solid solution is obtained. Although the titanium oxide nanoparticles have a high UV absorbing capacity, they have little or no photocatalytic activity.

(2) Ammonia and tetraalkoxysilane are added to the dispersion of tetragonal titanium oxide nanoparticles having manganese and tin incorporated in solid solution obtained in (1), and a given amount of monohydric alcohol is added to the mixture. The resulting mixture is rapidly heated for thereby forming dense shells of silicon oxide on surfaces of nanoparticles. In this step, the thickness of silicon oxide shells can be controlled in terms of the amount of alcohol added. Thus a water dispersion of core/shell type tetragonal titanium oxide solid-solution particles having manganese and tin incorporated in solid solution, having high transparency to visible light can be prepared without a need for pulverizing, and desirably without a need for sifting.

(3) The water dispersion of core/shell type tetragonal titanium oxide solid-solution particles obtained in (2) is blended with a silicone resin to formulate a silicone coating composition. Since a polymeric dispersant is absent and titanium oxide is surface covered with silicon oxide, the core/shell type tetragonal titanium oxide solid-solution particles can form tight crosslinks with the silicone resin binder. As a result, the silicone coating composition forms a coating which has improved substrate adhesion and mar resistance.

(4) The silicone coating composition described in (3) is applied to an organic substrate and cured to form a cured film. The weather resistance of the cured film depends on the type of element incorporated as solid solution in cores of core/shell type tetragonal titanium oxide particles. A cured silicone film containing core/shell type tetragonal titanium oxide particles having tetragonal titanium oxide cores in which the amount of tin in solid solution is to provide a Ti/Sn molar ratio of 10 to 1,000 and the amount of manganese in solid solution is to provide a Ti/Mn molar ratio of 10 to 1,000 is not cracked or whitened even after exposure to UV radiation in an accumulative energy quantity of 500 kWh/m$^2$.

The invention is predicated on these four discoveries (1) to (4).

A first aspect of the invention is a core/shell type tetragonal titanium oxide particle water dispersion in which core/shell type tetragonal titanium oxide solid-solution particles consisting of a nanosized core of tetragonal titanium oxide having tin and manganese incorporated in solid solution and a shell of silicon oxide around the core are dispersed in an aqueous dispersing medium. The cores have a 50% by volume cumulative distribution diameter $D_{50}$ of up to 30 nm, and the core/shell type titanium oxide particles have a 50% by volume cumulative distribution diameter $D_{50}$ up to 50nm. As known, $D_{50}$ is measurable by dynamic light scattering using laser light. The amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1.

Preferably, the core/shell type tetragonal titanium oxide particle water dispersion is free of any dispersant other than ammonia, alkali metal hydroxides, phosphates, hydrogenphosphates, carbonates and hydrogencarbonates.

Preferably, the core/shell type tetragonal titanium oxide particle water dispersion gives a transmittance of at least 80% when measured by transmitting light of wavelength 550 nm through a quartz cell having an optical path length of 1 mm which is filled with the core/shell type tetragonal titanium oxide particle water dispersion having a concentration of 1% by weight.

A second aspect is a method for preparing a core/shell type tetragonal titanium oxide particle water dispersion in which core/shell type tetragonal titanium oxide solid-solution particles consisting of a nanosized core of tetragonal titanium oxide having tin and manganese incorporated in solid solution and a shell of silicon oxide around the core are dispersed in an aqueous dispersing medium, wherein the cores have a 50% by volume cumulative distribution diameter $D_{50}$ of up to 30 nm, and the core/shell type titanium oxide particles have a 50% by volume cumulative distribution diameter $D_{50}$ of up to 50 nm, both as measured by the dynamic light scattering method using laser light, the amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1. The method comprises the steps of:

(A) blending a dispersion of tetragonal titanium oxide nanoparticles having tin and manganese incorporated in solid solution with a monohydric alcohol, ammonia, and a tetraalkoxysilane,
(B) rapidly heating the mixture of step (A) for forming core/shell type tetragonal titanium oxide solid-solution particles consisting of a core of tetragonal titanium oxide having tin and manganese incorporated in solid solution and a shell of silicon oxide around the core,
(C) removing water from the core/shell type tetragonal titanium oxide particle water dispersion of step (B) for concentrating the dispersion, and
(D) removing ammonia therefrom.

Preferably, step (A) includes adding not more than 100 parts by weight of the monohydric alcohol to 100 parts by weight of the dispersion of tetragonal titanium oxide nanoparticles having tin and manganese incorporated in solid solution for thereby controlling the thickness of the shell. Also preferably, the monohydric alcohol used in step (A) is at least one member selected from among methanol, ethanol, propanol and isopropyl alcohol.

Preferably, step (B) includes rapidly heating from room temperature to immediately below the boiling point of the dispersing medium within a time of 10 minutes. Typically step (B) includes microwave heating.

Preferably, step (C) includes atmospheric concentration, vacuum concentration, ultrafiltration or a combination thereof. Also preferably, step (D) uses a cation exchange resin for ammonia removal.

A third aspect is a UV-shielding silicone coating composition comprising

(I) the core/shell type tetragonal titanium oxide particle water dispersion defined above,
(II) a silicone resin obtained from (co)hydrolytic condensation of at least one member selected from the group consisting of an alkoxysilane having the general formula (1):

$$(R^1)_m(R^2)_nSi(OR^3)_{4-m-n} \qquad (1)$$

wherein $R^1$ and $R^2$ are each independently hydrogen or a substituted or unsubstituted monovalent hydrocarbon group, $R^1$ and $R^2$ may bond together, $R^3$ is $C_1$-$C_3$ alkyl, m and n each are 0 or 1, m+n is 0, 1 or 2, an alkoxysilane having the general formula (2):

$$Y[Si(R^4)_m(R^5)_n(OR^6)_{3-m-n}]_2 \qquad (2)$$

wherein Y is a divalent organic group selected from the group consisting of $C_1$-$C_{10}$ alkylene, $C_1$-$C_{10}$ perfluoroalkylene, $C_1$-$C_{10}$ di(ethylene)perfluoroalkylene, phenylene, and biphenylene, $R^4$ and $R^5$ are each independently hydrogen or a substituted or unsubstituted monovalent hydrocarbon group, $R^4$ and $R^5$ may bond together, $R^6$ is $C_1$-$C_3$ alkyl, m and n each are 0 or 1, m+n is 0, 1 or 2, and partial hydrolytic condensates thereof,
(III) a curing catalyst,
(IV) a solvent, and optionally,
(V) colloidal silica,

the solids of the core/shell type tetragonal titanium oxide particle water dispersion (I) being present in an amount of 1 to 30% by weight based on the solids of the silicone resin (II).

Preferably, component (III) is present in a sufficient amount to cure the silicone resin (II), and component (IV) is present in such an amount that the silicone coating composition may have a solid concentration of 1 to 30% by weight; the colloidal silica (V) is present in an amount of 5 to 100 parts by weight per 100 parts by weight of the solids of silicone resin (II).

Also preferably, when the silicone coating composition is coated and cured onto a vinyl copolymer layer on an organic resin substrate to form a cured film of 3 to 20 μm thick, the cured film is crack resistant even after exposure to UV radiation at an intensity of $1 \times 10^3$ W/m$^2$ for 500 hours.

Also preferably, when the silicone coating composition is coated and cured onto quartz to form a cured film of 5 μm thick, the cured film has a light transmittance of at least 90% in a wavelength range of 400 nm to 700 nm.

A fourth aspect is a coated article comprising a substrate and a cured film of the UV-shielding silicone coating composition coated on at least one surface of the substrate directly or via another layer.

Typically, the substrate is an organic resin substrate.

In a modified version of the fourth aspect, the coated article is defined as comprising an organic resin substrate, a primer film disposed on at least one surface of the substrate, the primer film comprising a vinyl copolymer having an organic UV-absorbing group and an alkoxysilyl group on side chain, and a cured film of the UV-shielding silicone coating composition on the primer film.

Other aspects include methods of making silicone coating compositions comprising combining the titanium oxide particles with the curable silicone resin and solvent.

## ADVANTAGEOUS EFFECTS

The water dispersion of core/shell type tetragonal titanium oxide solid-solution particles is blended with a silicone resin to formulate a UV-shielding silicone coating composition. The composition is applied to a substrate to form a coating having weather resistance, UV shielding capability, transparency, mar resistance, and durable adhesion.

## BRIEF DESCRIPTION OF DRAWINGS

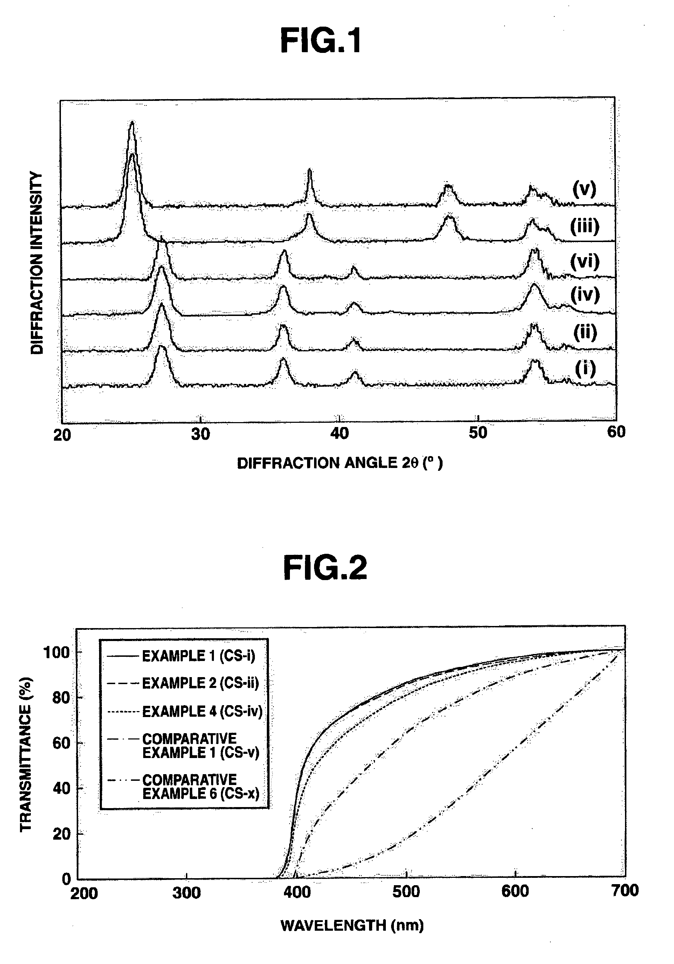

FIG. 1 is a diagram showing XRD charts of solid powders of titanium oxide dispersions prepared in Synthesis Examples 1, 2 and Comparative Synthesis Examples 1 to 4.

FIG. 2 is a diagram showing UV/visible transmission spectra of core/shell type titanium oxide solid-solution particle water dispersions prepared in Examples 1, 2, 4 and Comparative Examples 1, 6.

FIG. 3 is a spectrum by energy dispersive X-ray spectrometry on solids of the core/shell type titanium oxide solid-solution particle water dispersion prepared in Example 1.

FIG. 4 is diagram showing UV/visible transmission spectra of cured films obtained by coating and heat curing the silicone coating compositions of Examples 5, 6 and Comparative Examples 12, 13.

## FURTHER EXPLANATIONS; OPTIONS AND PREFERENCES

The singular forms "a," "an" and "the" include plural referents unless the context clearly dictates otherwise. The notation (Cn-Cm) means a group containing from n to m carbon atoms per group. UV refers to the ultraviolet region of the electromagnetic spectrum. Mw refers to a weight average molecular weight as measured by gel permeation chromatography (GPC) versus polystyrene standards. As used herein, the term "film" is interchangeable with "coating" or "layer".

Aspects of the invention include a water dispersion of core/shell type tetragonal titanium oxide particles consisting of a nanosized core of tetragonal titanium oxide having tin and manganese incorporated in solid solution and a shell of silicon oxide around the core, a method of preparing the water dispersion, a UV-shielding silicone coating composition comprising the water dispersion, and an article coated with the composition. These aspects will be described below in detail.

### Core/shell type tetragonal titanium oxide particle water dispersion

The first aspect is a water dispersion of core/shell type tetragonal titanium oxide particles. Specifically, core/shell type tetragonal titanium oxide particles each consisting of a nanosized core of tetragonal titanium oxide having tin and manganese incorporated in solid solution and a shell of silicon oxide around the core are dispersed in an aqueous dispersing medium.

Titanium oxide (or titania) generally includes three types, rutile, anatase and brookite types. Herein titanium oxide of tetragonal rutile type is preferably used as solvent for tin and manganese because it has a low photocatalytic activity and high UV-shielding capability.

Tin and manganese form a solid solution with titanium oxide. The tin component as one solute is not particularly limited as long as it is derived from a tin salt. Included are tin oxide and tin chalcogenides such as tin sulfide, with tin oxide being preferred. Exemplary tin salts include tin halides such as tin fluoride, tin chloride, tin bromide and tin iodide, tin halogenoids such as tin cyanide and tin isothiocyanide, and tin mineral acid salts such as tin nitrate, tin sulfate and tin phosphate. Of these, tin chloride is preferred for stability and availability. Tin in the tin salt may have a valence of 2 to 4, with tetravalent tin being preferred.

The manganese component as another solute is not particularly limited as long as it is derived from a manganese salt. Included are manganese oxide and manganese chalcogenides such as manganese sulfide, with manganese oxide being preferred. Exemplary manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate and manganese phosphate. Of these, manganese chloride is preferred for stability and availability. Manganese in the manganese salt may have a valence of 2 to 7, with divalent manganese being preferred.

When tin and manganese form a solid solution with tetragonal titanium oxide, the amount of tin incorporated in solid solution is to provide a molar ratio of titanium to tin (Ti/Sn) of 10/1 to 1,000/1, preferably 20/1 to 200/1, and the amount of manganese incorporated in solid solution is to provide a molar ratio of titanium to manganese (Ti/Mn) of 10/1 to 1,000/1, preferably 20/1 to 200/1. If the amount of tin or manganese in solid solution form is to provide a Ti/Sn or Ti/Mn molar ratio of less than 10, there is observed considerable light absorption in the visible region assigned to tin and manganese. If the Ti/Sn or Ti/Mn molar ratio exceeds 1,000, photocatalytic activity is not fully deprived, and undesirably, the crystal system transitions to anatase type having low visible absorptivity.

The solid solution form of tin and manganese components may be either substitutional or interstitial. The substitutional solid solution refers to a solid solution form in which tin and manganese substitute at the site of titanium(IV) ion in titanium oxide. The interstitial solid solution refers to a solid solution form in which tin and manganese fit in the space between crystal lattices of titanium oxide. The interstitial type tends to create F-center which causes coloring, and due to poor symmetry around a metal ion, the Franck-Condon factor of vibronic transition at the metal ion increases, leading to more absorption of visible light. For this reason, the substitution type is preferred.

A shell of silicon oxide is formed around the nanosized core of tetragonal titanium oxide having tin and manganese incorporated in solid solution. The shell may contain silicon oxide as the major component and another component(s) such as tin, aluminum and the like while it may be formed by any desired techniques. For example, the silicon oxide shell may be formed by hydrolytic condensation of a tetraalkoxysilane. Suitable tetraalkoxysilanes include commonly available ones such as tetramethoxysilane, tetraethoxysilane, tetra(n-propoxy)silane, tetra(i-propoxy)silane, and tetra(n-butoxy)silane. Of these, tetraethoxysilane is preferred from the standpoints of reactivity and safety. For example, useful tetraethoxysilane is commercially available under the tradename: KBE-04 from Shin-Etsu Chemical Co., Ltd. Hydrolytic condensation of a tetraalkoxysilane may be performed in water, optionally in the presence of a condensation catalyst such as ammonia, aluminum salts, organoaluminum compounds, tin salts, or organotin compounds. Inter alia, ammonia is especially preferred because it also serves as a dispersant for the nanosized cores.

Shells of silicon oxide are formed around nanosized cores of tetragonal titanium oxide having tin and manganese incorporated in solid solution, yielding core/shell type tetragonal titanium oxide particles. The silicon oxide shells preferably account for 20 to 50%, more preferably 25 to 45%, and even more preferably 30 to 40% by weight based on the overall core/shell type tetragonal titanium oxide particles. If the shell amount is less than 20 wt%, then shell formation may be insufficient. If the shell amount exceeds 50 wt%, then the resulting particles tend to agglomerate together, rendering the dispersion opaque.

In the dispersion of core/shell type tetragonal titanium oxide solid-solution particles, the nanosized cores of tetragonal titanium oxide having tin and manganese incorporated in solid solution should have a 50% by volume cumulative distribution diameter $D_{50}$ of up to 30 nm, preferably up to 20 nm, and the core/shell type tetragonal titanium oxide particles should have a 50% by volume cumulative distribution diameter $D_{50}$ of up to 50 nm, preferably up to 30 nm, both as measured by the dynamic light scattering method using laser light. If the diameters ($D_{50}$) of the cores and the core/shell type particles exceed the upper limits, undesirably the dispersion becomes opaque. The lower limit of diameter $D_{50}$ of the cores is at least 5 nm, though not critical. The lower limit of diameter $D_{50}$ of the core/shell type particles is at least 6 nm, though not critical. Notably, the 50% cumulative distribution diameter on volume basis ($D_{50}$, also known as "average particle size") is measured by Nanotrac UPA-EX150 (Nikkiso Co., Ltd.), LA-910 (Horiba Ltd.) or another instrument operating by dynamic light scattering.

Examples of the aqueous dispersing medium in which core/shell type tetragonal titanium oxide particles are dispersed include water and a mixture of water and a hydrophilic organic solvent in an arbitrary ratio. Water is preferably deionized water (ion exchanged water), distilled water, or pure water. Preferred hydrophilic organic solvents are alcohols such as methanol, ethanol, and isopropanol. An amount of the hydrophilic organic solvent, if mixed, is preferably 0 to 50% by weight based on the aqueous dispersing medium. Inter alia, deionized water or pure water is most preferred for productivity and cost.

In the water dispersion consisting of the core/shell type tetragonal titanium oxide particles and the aqueous dispersing medium, the core/shell type tetragonal titanium oxide particles are preferably present in a concentration of 0.1 to 30%, more preferably 5 to 15% by weight. It is acceptable that the aqueous dispersing medium contains a basic substance (dispersant) and other agents which are used in the preparation of the core/shell type tetragonal titanium oxide particles. In particular, since the basic substance has the functions of pH adjusting agent and dispersing agent, it may be used as an aqueous solution having a suitable concentration along with the aqueous dispersing medium. However, it is preferred that the water dispersion of core/shell type tetragonal titanium oxide particles be free of any dispersant (basic substance) other than ammonia, alkali metal hydroxides, phosphates, hydrogenphosphates, carbonates and hydrogencarbonates. This is because the inclusion of a selected basic substance eliminates a positive need for a polymeric dispersant which is otherwise necessary as a dispersant for titanium oxide nanoparticles in the prior art, and accordingly avoids any detrimental impacts which are exerted on mar resistance and substrate adhesion of a coating or cured film when a titanium oxide nanoparticle water dispersion containing a polymeric dispersant is applied to a hardcoat composition. Thus, the dispersion preferably contains a basic dispersant and is free of polymeric dispersant.

Examples of the basic substance (dispersant) which can be present in the core/shell type tetragonal titanium oxide particle water dispersion include ammonia, lithium hydroxide, sodium hydroxide, potassium hydroxide, cesium hydroxide, monolithium dihydrogenphosphate, monosodium dihydrogenphosphate, monopotassium dihydrogenphosphate, monocesium dihydrogenphosphate, dilithium hydrogenphosphate, disodium hydrogenphosphate, dipotassium hydrogenphosphate, dicesium hydrogenphosphate, trilithium phosphate, trisodium phosphate, tripotassium phosphate, tricesium phosphate, lithium hydrogencarbonate, sodium hydrogencarbonate, potassium hydrogencarbonate, cesium hydrogencarbonate, lithium carbonate, sodium carbonate, potassium carbonate, and cesium carbonate. Inter alia, ammonia and sodium hydroxide are preferred.

The core/shell type tetragonal titanium oxide particle water dispersion thus constructed has high transparency. Specifically, the dispersion gives a transmittance of preferably at least 80%, more preferably at least 85%, and even more preferably at least 90%, when measured by transmitting light of wavelength 550 nm through a quartz cell having an optical path length of 1 mm which is filled with the core/shell type tetragonal titanium oxide particle water dispersion diluted to a concentration of 1% by weight. The transmittance is readily determined by UV/visible transmission spectroscopy.

When a water dispersion of core/shell type tetragonal titanium oxide particles having tin and manganese incorporated in solid solution is prepared by the method to be described below, the solid-solution particles having a specific cumulative particle size distribution diameter can be formed without mechanical unit operations like pulverizing and sifting steps. Thus the method ensures very high production efficiency as well as very high transparency.

Method for preparation of core/shell type tetragonal titanium oxide particle water dispersion

A second aspect is a method for preparing a water dispersion of core/shell type tetragonal titanium oxide particles having tin and manganese incorporated in solid solution, the method comprising steps (A) to (D) which are described below in detail.

Step (A)

In step (A), a water dispersion of tetragonal titanium oxide nanoparticles having tin and manganese incorporated in solid solution is first prepared. The technique of preparing the water dispersion is not particularly limited. In the preferred procedure, starting materials including a titanium compound, tin compound, manganese compound, basic substance and hydrogen peroxide are reacted in an aqueous dispersing medium to form a solution of peroxotitanate containing tin and manganese, which is subjected to hydrothermal reaction, yielding a water dispersion of tetragonal titanium oxide nanoparticles having tin and manganese incorporated in solid solution.

The former stage of reaction to form a solution of peroxotitanate containing tin and manganese may follow one procedure involving the steps of adding a basic substance to a starting titanium compound in an aqueous dispersing medium to form titanium hydroxide, removing impurity ions, adding hydrogen peroxide to form peroxotitanate, adding a tin and manganese compound thereto to form a tin and manganese-containing peroxotitanate solution; or another procedure involving the steps of adding a tin and manganese compound to a starting titanium compound in an aqueous dispersing medium, adding a basic substance thereto to form titanium hydroxide containing tin and manganese, removing impurity ions, and adding hydrogen peroxide to form a tin and manganese-containing peroxotitanate solution.

Examples of the starting titanium compound include salts of titanium with mineral acids such as hydrochloride, nitrate and sulfate, salts of titanium with organic acids such as formate, citrate, oxalate, lactate and glycolate, and titanium hydroxide which is precipitated by adding alkali to such aqueous solution for hydrolysis. One or a mixture of two or more of the foregoing may be used.

The tin and manganese compounds may be selected from the aforementioned tin and manganese salts and used in such an amount as to form solid solution as mentioned above. The aqueous dispersing medium and basic substance may be selected from the aforementioned examples and used in the aforementioned amounts.

Hydrogen peroxide serves to convert the starting titanium compound or titanium hydroxide to peroxotitanate, that is, a titanium oxide-base compound having Ti-O-O-Ti bond. Typically aqueous hydrogen peroxide is used. The amount of hydrogen peroxide added is preferably 1.5 to 5 times the total moles of Ti, Sn and Mn. The reaction of hydrogen peroxide to convert the starting titanium compound or titanium hydroxide to peroxotitanate is preferably conducted at a temperature of 5 to 60°C and for a time of 30 minutes to 24 hours.

The tin and manganese-containing peroxotitanate solution may contain a basic or acidic substance for pH adjustment or the like. Exemplary basic substances include ammonia and analogs as mentioned above. Exemplary acidic substances include mineral acids such as sulfuric acid, nitric acid, hydrochloric acid, carbonic acid, phosphoric acid, and hydrogen peroxide, and organic acids such as formic acid, citric acid, oxalic acid, lactic acid, and glycolic acid. The tin and manganese-containing peroxotitanate solution is preferably at pH 1 to 7, more preferably pH 4 to 7, for safe handling.

The later stage of reaction to form a water dispersion of tetragonal titanium oxide nanoparticles having tin and manganese incorporated in solid solution is by subjecting the tin and manganese-containing peroxotitanate solution to hydrothermal reaction under conditions: a pressure of 0.01 to 4.5 MPa, preferably 0.15 to 4.5 MPa, a temperature of 80 to 250°C, preferably 120 to 250°C, and a time of 1 minute to 24 hours. By this reaction, the tin and manganese-containing peroxotitanate is converted to tetragonal titanium oxide nanoparticles having tin and manganese incorporated in solid solution. The above is an independent proposal herein.

In step (A), the water dispersion of tetragonal titanium oxide nanoparticles having tin and manganese incorporated in solid solution is blended with a monohydric alcohol, ammonia, and a tetraalkoxysilane (e.g., tetraethoxysilane).

Examples of the monohydric alcohol used herein include methanol, ethanol, propanol, isopropyl alcohol, and a mixture thereof, with ethanol being preferred. An appropriate amount of the monohydric alcohol used is up to 100 parts, more preferably up to 50 parts by weight per 100 parts by weight of the titanium oxide particle dispersion. By changing the amount of the monohydric alcohol blended, the thickness of silicon oxide shells formed around cores of tetragonal titanium oxide having tin and manganese incorporated in solid solution in the subsequent step (B) can be controlled. In general, as the amount of the monohydric alcohol blended increases, the thickness of silicon oxide shells increases because the solubility of silicon reactant (tetraalkoxysilane) in the reaction system increases while the dispersed state of titanium oxide is not adversely affected at all. That is, the water dispersion of core/shell type tetragonal titanium oxide particles having tin and manganese incorporated in solid solution can be formed in the subsequent step so as to fall in a specific cumulative distribution size, without mechanical unit operations like pulverizing and sifting steps, while the dispersion can be endowed with transparency in the visible region.

Ammonia used herein is typically aqueous ammonia. Instead of addition of aqueous ammonia, ammonia gas may be blown into the water dispersion of tetragonal titanium oxide particles having tin and manganese incorporated in solid solution. It is also acceptable to add a reagent capable of generating ammonia in the dispersion, instead of addition of aqueous ammonia. The concentration of aqueous ammonia is not particularly limited, and any commercially available aqueous ammonia may be used. In the preferred procedure, 28% conc. aqueous ammonia is used and added in increments until the water dispersion of tetragonal titanium oxide particles having tin and manganese incorporated in solid solution reaches pH 9 to 12, more preferably pH 9.5 to 11.5.

The tetraalkoxysilane may be selected from the aforementioned examples, with tetraethoxysilane being preferred. Tetraethoxysilane may be used as such while a (partial) hydrolyzate of tetraethoxysilane is also useful. Tetraethoxysilane or (partial) hydrolyzate thereof may be any of commercially available products, for example, KBE-04 (tetraethoxysilane by Shin-Etsu Chemical Co., Ltd.), Silicate 35 and Silicate 45 (partial hydrolytic condensate of tetraethoxysilane, Tama Chemicals Co., Ltd.), and ESI40 and ESI48 (partial hydrolytic condensate of tetraethoxysilane, Colcoat Co., Ltd.). Tetraethoxysilane or tetraalkoxysilanes may be used alone or in admixture of two or more.

The tetraalkoxysilane is blended in such an amount as to give 20 to 50%, preferably 25 to 45%, and more preferably 30 to 40% by weight of silicon oxide after hydrolysis, based on the silicon oxide-coated titanium oxide. Less than 20 wt% of silicon oxide indicates insufficient shell formation whereas more than 50 wt% of silicon oxide may promote agglomeration of particles, rendering the dispersion opaque.

When the water dispersion of tetragonal titanium oxide nanoparticles having tin and manganese incorporated in solid solution is blended with a monohydric alcohol, ammonia, and a tetraalkoxysilane (e.g., tetraethoxysilane), any suitable mixer means, for example, a magnetic stirrer, mechanical mixer, and vibratory mixer may be used.

Step (B)

In step (B), the mixture of step (A) is heated sufficiently to form core/shell type titanium oxide solid-solution particles each consisting of a nanosized core of tetragonal titanium oxide having tin and manganese incorporated in solid solution and a shell of silicon oxide around the core.

The heating is desirably generally rapid and the means may be any of the existing heating means, for example, microwave heating, a microreactor of high heat exchange efficiency, and heat exchanger with an external heat source of a high heat capacity. Inter alia, microwave heating is preferred because of uniform and rapid heating ability. The step of heating the mixture by applying microwave radiation may be either batchwise or continuous.

The heating step is preferably at such a rate as to elevate the temperature from starting temperature e.g. room temperature, to the treatment temperature or maximum temperature, such as to immediately below the boiling point of the dispersing medium (typically lower by about 10 to 80°C than the boiling point, e.g. at least 80°C), within a time of 10 minutes. If the heating step takes more than 10 minutes, undesirably the particles may tend to agglomerate together.

Where the rapid heating step includes microwave heating, the electromagnetic wave may be selected from the frequency range of 300 MHz to 3 THz. For example, according to the Radio Law of Japan, the microwave frequency band that can be utilized is limited to 2.45 GHz, 5.8 GHz, 24 GHz and the like. Of these, the 2.45 GHz band is most often utilized on a commercial basis, and magnetron oscillators in this frequency band are available at an acceptable price. The microwave standard differs depending on the law, economical status and the like of a particular country or region. Technically the frequency need not be limited. As long as the rated power is in the range of 100 W to 24 kW, preferably 100 W to 20 kW, any commercial microwave heater may be used, for example, μReactor Ex (Shikoku Instrumentation Co., Inc.) or Advancer (Biotage Japan Ltd.)

Desired microwave heating may be completed within a time of 10 minutes by adjusting the power of the microwave heater and by adjusting the volume of reaction solution in the case of batchwise reaction or the flow rate of reaction solution in the case of continuous reaction.

Step (C)

Step (C) is to remove water from the core/shell type tetragonal titanium oxide particle water dispersion of step (B) for concentrating the dispersion.

The concentrating means may be any of existing means, for example, atmospheric concentration, vacuum concentration, azeotropic dehydration, ultrafiltration, reverse osmosis, and freeze drying. If the water dispersion prior to concentration is at high temperature, there is a likelihood of evaporation to dryness. If the dispersion is at low temperature, there is a likelihood of freezing. In a dispersion of inorganic nanoparticles, a phase change is not always reversible, and a phase change and contact with solvent may rather cause to alter the dispersion. From this standpoint, a choice is preferably made among atmospheric concentration, vacuum concentration, and ultrafiltration. Inter alia, vacuum concentration under a pressure of up to 50 mmHg is preferred because of mild conditions.

In step (C), the core/shell type tetragonal titanium oxide particle water dispersion is preferably concentrated to a level of 5 to 20%, more preferably 8 to 17%, and even more preferably 10 to 15% by weight of core/shell type tetragonal titanium oxide particles. A concentration of less than 5 wt% indicates an extra content of water, leading to a compositional unbalance. If the concentration exceeds 20 wt%, the dispersion may become unstable and tends to gel with the lapse of time.

Step (D)

Step (D) is to remove ammonia from the concentrated core/shell type tetragonal titanium oxide particle water dispersion of step (C).

The ammonia removal means may be any of existing means, for example, ion exchange and adsorption. Preference is given to ammonia removal by a cation exchange resin. There may be used any of commercially available cation exchange resins, for example, Amberlite® IR120B, 200CT, IR124, FPC3500 and IRC76 marketed from Organo Co., Ltd. and Diaion® SK104 and PK208 by Mitsubishi Chemical Corp.

After the cation exchange resin is used for ammonia removal, the resin is removed by filtration. Any filtration sufficient to achieve the purpose of separation between the ion exchange resin and the core/shell particle dispersion may be employed herein. In general, when considered as mechanical unit operation, filtration belongs to the classifying operation. However, the filtration used herein does not participate in classification of core/shell particles. Accordingly, a choice may be made of filters having a coarse mesh size allowing for efficient passage of the core/shell particle dispersion, for example, mesh sieves and qualitative filter papers.

In step (D), ammonia is removed from the core/shell type tetragonal titanium oxide particle water dispersion until the concentration of ammonia preferably reaches 0.1% by weight or lower, more preferably 0.05% by weight or lower, and even more preferably 0.01% by weight or lower. If the ammonia concentration exceeds 0.1 wt%, it may function as a condensation catalyst to silicone in the composition to a noticeable extent to eventually induce cracks in the silicone hardcoat film.

The resulting water dispersion of core/shell type tetragonal titanium oxide particles having tin and manganese incorporated in solid solution may find use in various compositions including coating compositions, cosmetic compositions, and hardcoat compositions. In particular, the water dispersion is advantageously used as one component of a UV-shielding silicone coating composition or hardcoat composition.

UV-shielding silicone coating composition

A third aspect of the invention is a UV-shielding silicone coating composition comprising or obtainable by combining (I) the core/shell type tetragonal titanium oxide solid-solution particle water dispersion, (II) a silicone resin obtained or obtainable by (co)hydrolytic condensation of specific alkoxysilane and/or partial hydrolytic condensate thereof, (III) curing catalyst, (IV) solvent, and (V) optional colloidal silica, wherein the titanium oxide particles (I) as solids are present in an amount of 1 to 30% by weight based on the solids of the silicone resin (II).

Component (I)

Component (I) is the core/shell type tetragonal titanium oxide solid-solution particle water dispersion described above. Namely, it is a core/shell type tetragonal titanium oxide particle water dispersion in which core/shell type tetragonal titanium oxide solid-solution particles consisting of a nanosized core of tetragonal titanium oxide having tin and manganese incorporated in solid solution and a shell of silicon oxide around the core are dispersed in an aqueous dispersing medium, wherein the cores have a 50% by volume cumulative distribution diameter $D_{50}$ of up to 30 nm, and the core/shell type particles have a 50% by volume cumulative distribution diameter $D_{50}$ of up to 50 nm, both as measured by the dynamic light scattering method using laser light, the amount of tin incorporated in solid solution is to provide a molar ratio of titanium to tin (Ti/Sn) of 10 to 1,000, and the amount of manganese incorporated in solid solution is to provide a molar ratio of titanium to manganese (Ti/Mn) of 10 to 1,000.

The dispersion as component (I) is obtained by the method of the second aspect. The photocatalytic activity of the dispersion is blocked in that no fading is observed after addition of methylene blue and irradiation of black light. Specifically, the methylene blue fading test is performed by adding methylene blue to a 0.5 wt% core/shell type tetragonal titanium oxide particle water dispersion in a concentration of 0.01 mmol/L, filling a borosilicate glass vial with the dispersion, irradiating black light (irradiation intensity 0.5 mW/cm$^2$) for 24 hours, and colorimetric analysis. Fade is confirmed by a change of absorbance at 653 nm.

Also, the core/shell type tetragonal titanium oxide particle water dispersion (I) is used in such amounts that the solids of the core/shell type tetragonal titanium oxide particle water dispersion (I) is present in an amount of 1 to 30% by weight, preferably 3 to 20% by weight, and more preferably 5 to 15% by weight based on the solids of the silicone resin (II). A solid content of less than 1 wt% is insufficient to endow the coating composition with UV-shielding capability. If the solid content exceeds 30 wt%, then a coating of the coating composition is likely to undergo cure shrinkage, causing cracks.

Component (II)

Component (II) is a silicone resin obtained from (co)hydrolytic condensation of at least one member selected from among an alkoxysilane having the general formula (1):

$$(R^1)_m(R^2)_nSi(OR^3)_{4-m-n} \qquad (1)$$

wherein $R^1$ and $R^2$ are each independently hydrogen or a substituted or unsubstituted monovalent hydrocarbon group, $R^1$ and $R^2$ may bond together, $R^3$ is $C_1$-$C_3$ alkyl, m and n each are 0 or 1, m+n is 0, 1 or 2, an alkoxysilane having the general formula (2):

$$Y[Si(R^4)_m(R^5)_n(OR^6)_{3-m-n}]_2 \qquad (2)$$

wherein Y is a divalent organic group selected from among $C_1$-$C_{10}$ alkylene, $C_1$-$C_{10}$ perfluoroalkylene, $C_1$-$C_{10}$ di(ethylene)perfluoroalkylene, phenylene, and biphenylene, $R^4$ and $R^5$ are each independently hydrogen or a substituted or unsubstituted monovalent hydrocarbon group, $R^4$ and $R^5$ may bond together, $R^6$ is $C_1$-$C_3$ alkyl, m and n each are 0 or 1, m+n is 0, 1 or 2, and partial hydrolytic condensates thereof.

In formula (1), $R^1$ and $R^2$ are each independently selected from hydrogen and substituted or unsubstituted monovalent hydrocarbon groups, preferably having 1 to 12 carbon atoms, more preferably 1 to 8 carbon atoms, for example, hydrogen; alkyl groups such as methyl, ethyl, propyl, butyl, pentyl, hexyl, heptyl, and octyl; cycloalkyl groups such as cyclopentyl and cyclohexyl; alkenyl groups such as vinyl and allyl; aryl groups such as phenyl; halogenated hydrocarbon groups such as chloromethyl, γ-chloropropyl, and 3,3',3"-trifluoropropyl; (meth)acryloxy, epoxy, mercapto, amino or isocyanate-substituted hydrocarbon groups such as γ-methacryloxypropyl, γ-glycidoxypropyl, 3,4-epoxycyclohexylethyl, γ-mercaptopropyl, γ-aminopropyl, and γ-isocyanatopropyl. Also included is an isocyanurate group resulting from bonding of isocyanate moieties in a plurality of isocyanate-substituted hydrocarbon groups. Of these, alkyl groups are preferred in the application where mar resistance and weather resistance are required, and epoxy, (meth)acryloxy and isocyanurate-substituted hydrocarbon groups are preferred in the application where toughness and dyeability are required.

$R^3$ is a $C_1$-$C_3$ alkyl group such as methyl, ethyl, n-propyl or i-propyl. Of these, methyl and ethyl are preferred because hydrolytic condensation proceeds at a high reactivity and the resulting alcohol $R^3OH$ has a high vapor pressure and is easy to distill off.

A first class of alkoxysilanes of formula (1) wherein m=0 and n=0 is (a-1) a tetraalkoxysilane of the formula: $Si(OR^3)_4$ or a partial hydrolytic condensate thereof. Examples of the tetraalkoxysilane and partial hydrolytic condensate thereof include tetramethoxysilane, tetraethoxysilane, tetraisopropoxysilane, tetrabutoxysilane, partial hydrolytic condensates of tetramethoxysilane which are commercially available under the tradename of M Silicate 51 from Tama Chemicals Co., Ltd., MSI51 from Colcoat Co., Ltd., MS51 and MS56 from Mitsubishi Chemical Co., Ltd., partial hydrolytic condensates of tetraethoxysilane which are commercially available under the tradename of Silicate 35 and Silicate 45 from Tama Chemicals Co., Ltd., ESI40 and ESI48 from Colcoat Co., Ltd., partial co-hydrolytic condensates of tetramethoxysilane and tetraethoxysilane which are commercially available under the tradename of FR-3 from Tama Chemicals Co., Ltd., and EMSi48 from Colcoat Co., Ltd.

A second class of alkoxysilanes of formula (1) wherein m=1 and n=0 or m=0 and n=1 is (a-2) a trialkoxysilane of the formula: $R^1Si(OR^3)_3$ or $R^2Si(OR^3)_3$ or a partial hydrolytic condensate thereof. Examples of the trialkoxysilane and partial hydrolytic condensate thereof include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl) isocyanurate and tris(3-triethoxysilylpropyl) isocyanurate where isocyanate groups are bonded together, partial hydrolytic condensates of methyltrimethoxysilane which are commercially available under the tradename of KC-89S and X-40-9220 from Shin-Etsu Chemical Co., Ltd., partial hydrolytic condensates of methyltrimethoxysilane and γ-glycidoxypropyltrimethoxysilane which are commercially available under the tradename of X-41-1056 from Shin-Etsu Chemical Co., Ltd.

A third class of alkoxysilanes of formula (1) wherein m=1 and n=1 is (a-3) a dialkoxysilane of the formula: $(R^1)(R^2)Si(OR^3)_2$ or a partial hydrolytic condensate thereof. Examples of the dialkoxysilane and partial hydrolytic condensate thereof include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

In formula (2), $R^4$ and $R^5$ are each independently selected from hydrogen and substituted or unsubstituted monovalent hydrocarbon groups, preferably having 1 to 12 carbon atoms, more preferably 1 to 8 carbon atoms, for example, hydrogen; alkyl groups such as methyl, ethyl, propyl, butyl, pentyl, hexyl, heptyl, and octyl; cycloalkyl groups such as cyclopentyl and cyclohexyl; alkenyl groups such as vinyl and allyl; aryl groups such as phenyl; halogenated hydrocarbon groups such as chloromethyl, γ-chloropropyl, and 3,3',3"-trifluoropropyl; (meth)acryloxy, epoxy, mercapto, amino or isocyanate-substituted hydrocarbon groups such as γ-methacryloxypropyl, γ-glycidoxypropyl, 3,4-epoxycyclohexylethyl, γ-mercaptopropyl, γ-aminopropyl, and γ-isocyanatopropyl. Also included is an isocyanurate group resulting from bonding of isocyanate moieties in a plurality of isocyanate-substituted hydrocarbon groups. Of these, alkyl groups are preferred in the application where mar resistance and weather resistance are required, and epoxy, (meth)acryloxy and isocyanurate-substituted hydrocarbon groups are preferred in the application where toughness and dyeability are required.

$R^6$ is a $C_1$-$C_3$ alkyl group such as methyl, ethyl, n-propyl or i-propyl. Of these, methyl and ethyl are preferred because hydrolytic condensation proceeds at a high reactivity and the resulting alcohol $R^6OH$ has a high vapor pressure and is easy to distill off.

A fourth class (a-4) of alkoxysilanes of formula (2) wherein m=0 and n=0 includes ω-bis(trialkoxysilyl)alkanes, ω-bis(trialkoxysilyl)perfluoroalkanes, ω-bis(trialkoxysilyl)partialfluoroalkanes, o-, m- or p-bis(trialkoxysilyl)benzenes, bis(trialkoxysilyl)biphenyls, and partial hydrolytic condensates thereof.

Y is preferably a partially fluorinated alkylene group. From the standpoint of synthesis, ω-diethylene(perfluoroalkylene) is readily available. Exemplary are those of formula (2) wherein Y is ω-bisethylene[tetrakis(difluoromethylene)] and $R^6$ is methyl.

The silicone resin as component (II) may be prepared using the foregoing (a-1), (a-2), (a-3) and (a-4) alone or in a combination of two or more in an arbitrary ratio. For shelf stability, mar resistance and crack resistance, it is preferred to use 0 to 50 Si-mol% of (a-1), 50 to 100 Si-mol% of (a-2), and 0 to 10 Si-mol% of (a-3), provided that the total of (a-1), (a-2), (a-3) and (a-4) is 100 Si-mol%; and it is more preferred to use 0 to 30 Si-mol% of (a-1), 70 to 100 Si-mol% of (a-2), 0 to 10 Si-mol% of (a-3), and 0 to 5 Si-mol% of (a-4). If the main component (a-2) is less than 50 Si-mol%, the resin may have a lower crosslinking density and less curability, tending to form a cured film with a lower hardness. If component (a-1) is in excess of 50 Si-mol%, the resin may have a higher crosslinking density and a lower toughness to permit crack formation. By using component (a-4) in a small amount of up to 5 Si-mol%, surface properties may be altered, for example, control of water contact angle, impartment of mar resistance and improvement in pencil hardness being possible.

It is noted that Si-mol% is a percentage based on the total Si moles, and the Si mole means that in the case of a monomer, its molecular weight is 1 mole, and in the case of a dimer, its average molecular weight divided by 2 is 1 mole.

The silicone resin as component (II) may be prepared through (co)hydrolytic condensation of one or more of components (a-1), (a-2), (a-3), and (a-4) by a well-known method. For example, an alkoxysilane (a-1), (a-2), (a-3) or (a-4) or partial hydrolytic condensate thereof alone or a mixture thereof is (co)hydrolyzed in water at pH 1 to 7.5, preferably pH 2 to 7. At this point, metal oxide nanoparticles dispersed in water such as silica sol may be used. A catalyst may be added to the system for adjusting its pH to the described range and to promote hydrolysis. Suitable catalysts include organic acids and inorganic acids such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid, solid acid catalysts such as cation exchange resins having carboxylate or sulfonate groups on the surface, and water-dispersed metal oxide nanoparticles such as acidic water-dispersed silica sol. Alternatively, a dispersion of metal oxide nanoparticles in water or organic solvent such as silica sol may be co-present upon hydrolysis. It is acceptable to mix water, an acidic hydrolytic catalyst and alkoxysilane in the co-presence of the water dispersion (I) before hydrolytic condensation reaction takes place. This process is advantageous because the dispersibility of component (I) is improved, despite a possibility of partial reaction between component (I) and the alkoxysilane or hydrolytic condensate (II). Specifically, if component (I) is added during the reaction step of component (II), this results in component (I) being surface treated with the binder component itself, whereby dispersibility is improved. In the prior art technique for silicone coating of inorganic particles, the dispersed state of inorganic particles is temporarily stable, but becomes unstable during storage. This is because the silicone for coating and the silicone as binder are different in composition (or primary structure) and even when identical in composition, they are normally not identical in a strict sense with respect to secondary structure such as degree of condensation or polydispersity index. In contrast, if particles are surface treated with a binder resin itself, then the coating and binder resins are identical in secondary structure as well, leading to improvements in compatibility and dispersibility.

In this hydrolysis, water may be used in an amount of 20 to 3,000 parts by weight per 100 parts by weight of the total of alkoxysilanes (a-1), (a-2), (a-3) and (a-4) and partial hydrolytic condensates thereof. An excess of water may lower system efficiency and in a final coating composition, residual water can adversely affect coating operation and drying. Water is preferably used in an amount of 50 to 150 parts by weight for the purpose of improving storage stability, mar resistance, and crack resistance. With a smaller amount of water, the silicone resin may fail to reach a weight average molecular weight in the optimum range (described later), as measured by GPC versus polystyrene standards. With an excess of water, the content in the silicone resin of units $R'SiO_{3/2}$ in units $R'SiO_{(3-p)/2}(OX)_p$ derived from component (a-2) may fail to reach the optimum range to maintain a coating crack resistant wherein R' is $R^1$ or $R^2$, X is hydrogen or $R^3$, $R^1$, $R^2$, and $R^3$ are as defined above, and p is an integer of 0 to 3.

Hydrolysis may be effected by adding dropwise or pouring water to the alkoxysilane or partial hydrolytic condensate, or inversely by adding dropwise or pouring the alkoxysilane or partial hydrolytic condensate to water. The reaction system may contain an organic solvent. However, the absence of organic solvent is preferred because there is a tendency that as the reaction system contains more organic solvent, the resulting silicone resin has a lower weight average molecular weight as measured by GPC versus polystyrene standards.

To produce the silicone resin (II), the hydrolysis must be followed by condensation. Condensation may be effected continuous to the hydrolysis while maintaining the liquid temperature at room temperature or heating at a temperature of not higher than 100°C. A temperature higher than 100°C may cause gelation. Condensation may be promoted by distilling off the alcohol formed by hydrolysis at a temperature of at least 80°C and atmospheric or subatmospheric pressure. Also for the purpose of promoting condensation, condensation catalysts such as basic compounds, acidic compounds or metal chelates may be added. Prior to or during the condensation step, an organic solvent may be added for the purpose of adjusting the progress of condensation or the concentration, or a dispersion of metal oxide nanoparticles in water or organic solvent such as silica sol or component (I) may also be added. For the reason that a silicone resin generally builds up its molecular weight and reduces its solubility in water or formed alcohol as condensation proceeds, the organic solvent added herein should preferably be one having a boiling point of at least 80°C and a relatively highly polarity in which the silicone resin is fully dissolvable. Examples of the organic solvent include alcohols such as isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate (PGMEA); and esters such as propyl acetate, butyl acetate, and cyclohexyl acetate. The organic solvent may be added in an amount sufficient to dissolve the silicone resin, typically 100 to 1,000% by weight based on the silicone resin solids. If the amount of the organic solvent added is less than 100 wt%, phase separation can occur during low-temperature storage, indicating poor quality. If the amount of the organic solvent added exceeds 1,000 wt%, the coating composition has so low a concentration of the resin or active ingredient that it is difficult to form a satisfactory coating.

The silicone resin resulting from condensation should preferably have a weight average molecular weight (Mw) of at least 1,500, more preferably 1,500 to 50,000, and even more preferably 2,000 to 20,000, as measured by GPC versus polystyrene standards. With a Mw below the range, a coating tends to be less tough and prone to cracking. On the other hand, a silicone resin with too high a Mw tends to have a low hardness and the resin in a coating may undergo phase separation, causing the coating to be whitened.

When the silicone resin as component (II) is obtained from (co)hydrolytic condensation of the alkoxysilane and/or partial hydrolytic condensate thereof, the core/shell type tetragonal titanium oxide particle water dispersion as component (I) may be added to the alkoxysilane and/or partial hydrolytic condensate thereof prior to (co)hydrolytic condensation. Where colloidal silica is used as component (V), this colloidal silica may also be added to the (co)hydrolytic condensation system.

The condensation may be followed by concentration or solvent exchange. Concentration may be performed by any existing techniques such as distillation, reverse osmosis, freeze drying and vacuum drying.

Solvent exchange may be performed by adding another solvent and subsequent azeotropic distillation, reverse osmosis, or ultrafiltration. Examples of the other solvent include alcohols such as methanol, ethanol, isopropanol, n-butanol, isobutanol, stearyl alcohol, oleyl alcohol, and lauryl alcohol; aromatic hydrocarbons such as toluene and xylene; esters such as ethyl acetate and butyl acetate; ketones such as methyl ethyl ketone and methyl isobutyl ketone; glycol ethers such as ethyl cellosolve and propylene glycol monomethyl ether, and saturated hydrocarbons such as n-hexane, and mixtures thereof.

The silicone resin may be adjusted to pH 3 to 7 by adding a pH adjustor. Any acids or basic compounds may be used as the pH adjustor. Typically organic or inorganic acids are used, for example, hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid.

Component (III)

Component (III) is a curing catalyst which serves to promote condensation reaction of condensable groups such as silanol and alkoxy groups in silicone resin (II). Suitable catalysts include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide (TMAH), tetramethylammonium acetate, n-hexylamine, tributylamine, diazabicycloundecene (DBU), and dicyandiamide; metal-containing compounds such as tetraisopropyl titanate, tetrabutyl titanate, acetylacetonatotitanium, aluminum triisobutoxide, aluminum triisopropoxide, tris(acetylacetonato)aluminum, aluminum diisopropoxy(ethyl acetoacetate), aluminum perchlorate, aluminum chloride, cobalt octylate, (acetylacetonato)cobalt, (acetylacetonato)iron, (acetylacetonato)tin, dibutyltin octylate, and dibutyltin laurate; and acidic compounds such as p-toluenesulfonic acid and trichloroacetic acid. Of these, preference is given to sodium propionate, sodium acetate, sodium formate, trimethylbenzylammonium hydroxide, TMAH, tris(acetylacetonato)aluminum, and aluminum diisopropoxy(ethyl acetoacetate).

Another useful curing catalyst is an aromatic-free compound having the general formula (3). The silicone coating composition loaded with this catalyst becomes shelf stable while remaining curable and crack resistant.

$$[(R^7)(R^8)(R^9)(R^{10})M]^+ \cdot X^- \qquad (3)$$

Herein $R^7$, $R^8$, $R^9$ and $R^{10}$ are each independently a $C_1$-$C_{18}$ alkyl group which may be substituted with halogen, each of $R^7$, $R^8$, $R^9$ and $R^{10}$ has a Taft-Dubois steric substituent constant Es, the total of constants Es of $R^7$, $R^8$, $R^9$ and $R^{10}$ is up to -0.5, M is an ammonium or phosphonium cation, and $X^-$ is a halide anion, hydroxide anion or $C_1$-$C_4$ carboxylate anion.

Taft-Dubois steric substituent constant Es is a rate of esterification reaction of a substituted carboxylic acid under acidic conditions relative to methyl group $CH_3$ and represented by the equation:

$$Es = \log(k/k0)$$

wherein k is a rate of acidic esterification reaction of a substituted carboxylic acid under specific conditions and k0 is a rate of acidic esterification reaction of methyl-substituted carboxylic acid under the same conditions. See J. Org. Chem., 45, 1164 (1980) and J. Org. Chem., 64, 7707 (1999).

In general, Taft-Dubois steric substituent constant Es is an index representing the steric bulkiness of a substituent. For example, the value of constant Es is 0.00 for methyl, -0.08 for ethyl, -0.31 for n-propyl, and -0.31 for n-butyl, indicating that the lower (or more negative) the Es, the more sterically bulky is the substituent.

In formula (3), the total of constants Es of $R^7$, $R^8$, $R^9$ and $R^{10}$ should be equal to or more negative than -0.5. If the total of constants Es is above -0.5, a coating composition becomes low in shelf stability and forms a coat which can be cracked or whitened in a water-resistant test and loses adhesion, especially adhesion in water and adhesion in boiling water. In the event the total of constants Es is above -0.5, for example, $R^7$, $R^8$, $R^9$ and $R^{10}$ are all methyl, a corresponding catalyst of formula (3) becomes higher in catalytic activity, but a coating composition comprising the same tends to lose shelf stability and a coat thereof becomes so hygroscopic as to develop defects in a water-resistant test. The total of constants Es of $R^7$, $R^8$, $R^9$ and $R^{10}$ is preferably not lower than -3.2, and more preferably not lower than -2.8.

In formula (3), $R^7$, $R^8$, $R^9$ and $R^{10}$ are alkyl groups of 1 to 18 carbon atoms, preferably 1 to 12 carbon atoms, which may be substituted with halogen, for example, alkyl groups such as methyl, ethyl, propyl, butyl, pentyl, hexyl, heptyl, and octyl; cycloalkyl groups such as cyclopentyl and cyclohexyl; and halo-alkyl groups such as chloromethyl, γ-chloropropyl and 3,3,3-trifluoropropyl.

M is an ammonium or phosphonium cation. $X^-$ is a halide anion, hydroxide anion or $C_1$-$C_4$ carboxylate anion, and preferably a hydroxide anion or acetate anion.

Illustrative examples of the curing catalyst having formula (3) include, but are not limited to, hydroxides such as tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-t-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-t-butylphosphonium hydroxide; salts of the foregoing hydroxides with halogenic acids and with $C_1$-$C_4$ carboxylic acids. Inter alia, tetrapropylammonium hydroxide, tetrapropylammonium acetate, tetrabutylammonium hydroxide, tetrabutylammonium acetate, tetrabutylphosphonium hydroxide, and tetrabutylphosphonium acetate are preferred. These may be used alone or in admixture of two or more, or in combination with any of the aforementioned well-known curing catalysts.

Insofar as component (III) is compounded in an effective amount to cure the silicone resin (II), the amount of the catalyst is not particularly limited. Specifically the curing catalyst is preferably used in an amount of 0.0001 to 30% by weight, more preferably 0.001 to 10% by weight, based on the solids of the silicone resin. Less than 0.0001 wt% of the catalyst may lead to under-cure and low hardness. More than 30 wt% of the catalyst may lead to a coating which is prone to cracking and poorly water resistant.

Component IV

Component (IV) is a solvent. The solvent is not particularly limited as long as components (I) to (III) are dissolvable or dispersible therein. A solvent mainly comprising a highly polar organic solvent is preferred. Exemplary solvents include alcohols such as methanol, ethanol, isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate, butyl acetate, and cyclohexyl acetate. The solvents may be used alone or in admixture.

Component (IV) is preferably added in such an amount that the silicone coating composition may have a solids concentration of 1 to 30% by weight, more preferably 5 to 25% by weight. Outside the range, a coating obtained by applying the composition and curing may be defective. A concentration below the range may lead to a coating which is likely to sag, wrinkle or mottle, failing to provide the desired hardness and mar resistance. A concentration beyond the range may lead to a coating which is prone to brushing, whitening or cracking.

Component V

Optionally, the composition further comprises (V) colloidal silica. Particularly when it is desired to enhance the hardness and mar resistance of a coating, an appropriate amount of colloidal silica may be added. It is a colloidal dispersion of nanosized silica having a particle size of about 5 to 50 nm in a medium such as water or organic solvent. Commercially available water-dispersed or organic solvent-dispersed colloidal silica may be used herein. Examples include Snowtex-O, OS, OL and Methanol Silica Sol by Nissan Chemical Industries, Ltd. The colloidal silica may be compounded in an amount of 0 to 100 parts, preferably 5 to 100 parts, and more preferably 5 to 50 parts by weight per 100 parts by weight as solids of the silicone resin (II).

If desired, suitable additives may be added to the silicone coating composition insofar as they do not adversely affect the objects of the invention. Suitable additives include pH adjustors, leveling agents, thickeners, pigments, dyes, metal oxide nanoparticles, metal powder, antioxidants, UV absorbers, UV stabilizers, heat ray reflecting/absorbing agents, flexibilizers, antistatic agents, anti-staining agents, and water repellents.

For enhanced storage stability, the silicone coating composition may preferably be adjusted to pH 2 to 7, more preferably pH 3 to 6. Since a pH value outside the range may lessen storage stability, a pH adjustor may be added so that the pH falls in the range. For a silicone coating composition having a pH value outside the range, if the pH is more acidic than the range, a basic compound such as ammonia or ethylenediamine may be added for pH adjustment. If the pH is more basic than the range, an acidic compound such as hydrochloric acid, nitric acid, acetic acid or citric acid may be added for pH adjustment. The pH adjustment method is not particularly limited.

The silicone coating composition may be obtained by mixing selected amounts of the respective components (I) to (V) in a standard manner.

Coated article

The UV-shielding silicone coating composition thus formulated may be applied to at least one surface of a substrate directly or via another layer or layers. It is then cured to yield a coated article. The article is covered with the cured film which meets both weather resistance and UV-shielding capability without detracting from aesthetic appearance, and possesses transparency, mar resistance and durable adhesion as well.

The silicone coating composition may be applied to the substrate by any ordinary coating techniques. Suitable coating techniques include brush coating, spray coating, dipping, flow coating, roll coating, curtain coating, spin coating, and knife coating.

The substrate used herein is not particularly limited and includes molded plastics, wood items, ceramics, glass, metals, and composites thereof. Of these, plastic materials or organic resin substrates are preferred. Examples include polycarbonate, polystyrene, acrylic resins, modified acrylic resins, urethane resins, thiourethane resins, polycondensates of halogenated bisphenol A and ethylene glycol, acrylic urethane resins, halogenated aryl-containing acrylic resins, and sulfur-containing resins. These resin substrates which have been surface treated, specifically by conversion treatment, corona discharge treatment, plasma treatment, acid or alkaline treatment are also useful. Also included are laminated substrates comprising a resin substrate and a surface layer formed thereon from a resin of different type from the substrate. Exemplary laminated substrates include those consisting of a polycarbonate resin substrate and a surface layer of acrylic resin or urethane resin which are prepared by co-extrusion or lamination technique, and those consisting of a polyester resin substrate and a surface layer of acrylic resin formed thereon.

After the silicone coating composition is applied, the coating may be air dried or heated to form a cured film. The curing temperature and time are not particularly limited although the coating is preferably heated at a temperature below the heat resistant temperature of the substrate for 10 minutes to 2 hours. More preferably the coating is heated at a temperature of 80 to 135°C for 30 minutes to 2 hours.

The thickness of the cured film is not particularly limited and may be selected as appropriate for a particular application. The cured film preferably has a thickness of 0.1 to 50 $\mu$m, and more preferably in the range of 1 to 20 $\mu$m for ensuring that the cured film has hardness, mar resistance, long-term stable adhesion and crack resistance.

The silicone coating composition of the invention is characterized by visible light transmittance in coating form. An index of visible light transmittance is the haze of a film. In general, the haze increases as the film becomes thicker. The film having a thickness of up to 5 $\mu$m preferably meets a haze of up to 2.0, more preferably up to 1.5, and even more preferably up to 1.0. The haze is measured by a haze meter NDH2000 (Nippon Denshoku Industries Co., Ltd.).

The silicone coating composition is also characterized by mar resistance in coating form. An index of mar resistance is a delta haze value ($\Delta$Hz) in the Taber abrasion test. Specifically, a $\Delta$Hz value is determined according to ASTM D1044 by mounting a Taber abrasion tester with abrasion wheels SC-10F, measuring the haze after 500 turns under a load of 500 g, and calculating a difference ($\Delta$Hz) between haze values before and after the test. The film having a thickness of up to 5 $\mu$m preferably has $\Delta$Hz of up to 15.0, more preferably up to 13.0, and even more preferably up to 10.0.

The silicone coating composition is further characterized by weather resistance in coating form. An index of weather resistance is given by a weathering test to see whether or not a coating is kept intact, that is, whether or not a coating is cracked. To examine the development of cracks in a coating, the weathering test is carried out by using EYE Super UV tester W-151 (Iwasaki Electric Co., Ltd.), and irradiating UV light having an intensity of $1\times10^3$ W/m$^2$ at a temperature of 60°C and a relative humidity (RH) of 50%, and determining an irradiation time until cracks develop in the coating. The cured film within the scope of the invention undergoes neither cracking nor whitening and maintains aesthetic appearance even after exposure in an accumulative UV energy quantity of 500 kWh/m$^2$.

In the weathering test, any environment of test conditions may be set. An accumulative UV energy quantity of 500 kWh/m$^2$ corresponds to outdoor exposure over about 10 years. The correlation of test conditions to outdoor exposure may be readily estimated. For example, an outdoor UV illuminance is $1\times10^1$ W/m$^2$, when measured at noon on fine Vernal Equinox Day at Matsuida, Annaka City, Gunma Pref., Japan, using a UV illuminometer (EYE UV illuminometer UVP365-1 by Iwasaki Electric Co., Ltd.). Assume that the annual average daily sunshine time is 12 hours, the accumulative illuminance is 12 (h/day) $\times$ 365 (day/year) $\times$ 10 (year) $\times$ 10 (W/m$^2$) = 438 (kWh/m$^2$). When the facts that the outdoor environment depends on the latitude and weather, and the weathering test uses an artificial environment are taken into account, it is reasonable that an approximation of 500 kWh/m$^2$ corresponds to outdoor exposure over 10 years. The test conditions may be changed depending on a particular environment where the cured film is used.

The fourth advantage of the silicone coating composition is good adhesion of a cured film to a substrate. An index of adhesion is evaluated by a cross-hatch adhesion test according to JIS K5400, specifically by scribing a coating with a razor along 6 longitudinal and 6 transverse lines at a spacing of 2 mm to define 25 square sections, tightly attaching adhesive tape (Cellotape by Nichiban Co., Ltd.), and rapidly pulling back the adhesive tape at an angle of 90°. The number (X) of sections remaining intact (not peeled) is expressed as X/25. As the number (X) of remaining sections is closer to 25, the sample is better in adhesion. An index of water-proof adhesion is available when the film-bearing substrate is immersed in boiling water at 100°C for 2 hours prior to a cross-hatch adhesion test as above.

The silicone coating composition may be applied to the surface of a substrate directly or via another layer or layers. Suitable intervening layers include a primer layer, UV-absorbing layer, printing layer, recording layer, heat-ray shielding layer, adhesive layer, inorganic vapor-deposited layer and the like.

The procedures (A) and (B) constitute an independent proposal for the formation of silicon oxide shells on titanium oxide core particles.

EXAMPLE

Examples and Comparative Examples are given below by way of illustration and not by way of limitation.

Unless otherwise stated, all parts are by weight. Reactants were purchased from chemical suppliers including Wako Pure Chemical Industries, Ltd. (abbreviated Wako) and Shin-Etsu Chemical Co., Ltd. (abbreviated Shin-Etsu).

Preparation of titanium oxide dispersion

Synthesis Example 1

Preparation of titanium oxide dispersion (i) (4 mol% tin and 0.5 mol% manganese relative to 100 mol% titanium)

To 66.0 g of 36 wt% titanium(IV) chloride aqueous solution (TC-36 by Ishihara Sangyo Kaisha, Ltd.) were added 1.8 g of tin(IV) chloride pentahydrate (Wako) and 0.12 g of manganese(II) chloride tetrahydrate (Wako). They were thoroughly mixed and diluted with 1,000 g of deionized water. To the metal salt aqueous solution mixture, 300 g of 5 wt% aqueous ammonia (Wako) was gradually added for neutralization and hydrolysis, yielding a precipitate of titanium hydroxide containing tin and manganese. This titanium hydroxide slurry was at pH 8. The precipitate of titanium hydroxide was deionized by repeating deionized water addition and decantation. To the precipitate of titanium hydroxide containing tin and manganese after deionization, 100 g of 30 wt% aqueous hydrogen peroxide (Wako) was gradually added, whereupon stirring was continued at 60°C for 3 hours for full reaction. Thereafter, pure water was added for concentration adjustment, yielding a brown clear solution of tin and manganese-containing peroxotitanate (solid concentration 1 wt%).

An autoclave of 500 mL volume (TEM-D500 by Taiatsu Techno Co., Ltd.) was charged with 350 mL of the peroxotitanate solution synthesized as above, which was subjected to hydrothermal reaction at 200°C and 1.5 MPa for 240 minutes. The reaction mixture in the autoclave was taken out via a sampling tube to a vessel in water bath at 25°C whereby the mixture was rapidly cooled to quench the reaction, obtaining a titanium oxide dispersion (i).

Synthesis Example 2

Preparation of titanium oxide dispersion (ii) (6 mol% tin and 2.0 mol% manganese relative to 100 mol% titanium)

A titanium oxide dispersion (ii) was obtained as in Synthesis Example 1 except that 2.6 g of tin(IV) chloride pentahydrate and 0.50 g of manganese(II) chloride tetrahydrate were added.

Comparative Synthesis Example 1

Preparation of titanium oxide dispersion (iii) (neither tin nor manganese in solid solution)

A titanium oxide dispersion (iii) was obtained as in Synthesis Example 1 except that tin(IV) chloride pentahydrate and manganese(II) chloride tetrahydrate were omitted.

Comparative Synthesis Example 2

Preparation of titanium oxide dispersion (iv) (4 mol% tin relative to 100 mol% titanium)

A titanium oxide dispersion (iv) was obtained as in Synthesis Example 1 except that manganese(II) chloride tetrahydrate was omitted.

Comparative Synthesis Example 3

Preparation of titanium oxide dispersion (v) (2 mol% manganese relative to 100 mol% titanium)

A titanium oxide dispersion (v) was obtained as in Synthesis Example 1 except that tin(IV) chloride pentahydrate was omitted.

Comparative Synthesis Example 4

Preparation of titanium oxide dispersion (vi) (4 mol% tin and 0.5 mol% vanadium relative to 100 mol% titanium)

A titanium oxide dispersion (vi) was obtained as in Synthesis Example 1 except that 0.13 g of vanadium(IV) oxysulfate n-hydrate (Wako) was used instead of manganese(II) chloride tetrahydrate.

Comparative Synthesis Example 5

Preparation of titanium oxide dispersion (vii) (titanium oxide with neither tin nor manganese in solid solution, using polymeric dispersant instead of ammonia as dispersant)

To 5 g of rutile type titanium oxide (trade name: titanium oxide, rutile nanopowder 637262-25G by Aldrich) were added 490 g of deionized water and 5 g of polymeric dispersant (Disperbyk 190 by BYC Chemie). They were milled on a bead mill (Ultra Apex Mill AM015 by Kotobuki Industries Co., Ltd.) using zirconia beads (trade name TZ-B30, diameter 0.03 mm, 400 g, Nikkato Co., Ltd.). There was obtained a titanium oxide dispersion (vii). It had an average particle size of 40 nm as measured by the method to be described below.

Comparative Synthesis Example 6

Preparation of titanium oxide-manganese composite dispersion (viii)

A titanium oxide-manganese composite amorphous sol was prepared according to Patent Document 5 (JP 4398869). Specifically, 0.52 g of manganese(II) chloride tetrahydrate was dissolved in 500 g of water, and 7.7 g of 65 wt% titanium chloride aqueous solution and 500 g of water were added dropwise thereto. Then 55 g of 2.8 wt% aqueous ammonia was added dropwise. The resulting precipitate was washed until the conductivity of the filtrate reached 0.68 mS/m or below. The precipitate was suspended in 350 g of water. 30 g of 30 wt% aqueous hydrogen peroxide was added dropwise to the suspension, which was stirred for 16 hours. A small amount of platinum(IV) chloride was added to decompose hydrogen peroxide, obtaining a titanium oxide-manganese composite dispersion (viii).

Evaluation of titanium oxide dispersion

The titanium oxide dispersions (i) to (vi) were evaluated as follows. The results are shown in Table 1.

Average particle size

An average particle size was measured by Nanotrac UPA-EX150 (Nikkiso Co., Ltd.) based on the dynamic scattering method using laser light, as the 50% cumulative particle size distribution diameter on volume basis ($D_{50}$).

Crystal type

Crystallographic analysis was made by a powder X-ray diffractometer (MiltiFlex by Rigaku Corp.).

Photocatalytic activity

Photocatalytic activity was examined by a self-cleaning test on a photocatalyst material according to JIS R1703-1. Specifically, colloidal silica (Snowtex 20 by Nissan Chemical Industries, Ltd.) as binder was added to the titanium oxide dispersion so as to give a $TiO_2/SiO_2$ ratio of 1.5. This liquid was coated on a slide glass by a dip coater and dried, forming a titanium oxide/silica composite thin film of 150 nm thick. This titanium oxide thin film was exposed to UV radiation from a black-light lamp in a UV intensity of 1 mW/cm$^2$ (measured by UV sensor UV-340 by Custom Co.) for 24 hours.

Next, a n-heptane solution containing oleic acid in a concentration of 0.5 vol% was coated on the surface of the thin film by a dip coater at a pull rate of 10 mm/sec, and dried at 70°C for 15 minutes, yielding a test sample. The test sample was measured for initial contact angle with water by a contact angle meter (CA-A by Kyowa Interface Science Co., Ltd.). The sample was exposed to UV from a black-light lamp at a UV intensity of 1 mW/cm$^2$ for 6 hours whereupon it was measured for contact angle with water again. Notably, contact angle with water was measured at 5 spots, with an average value of 5 measurements reported. A percent change of contact angle is computed as follows.

$$\text{change (\%) of contact angle} = [\{(\text{initial contact angle}) - (\text{contact angle after 6 hours})\}/(\text{initial contact angle})] \times 100$$

Table 1

| | | Synthesis Example | | Comparative Synthesis Example | | | |
|---|---|---|---|---|---|---|---|
| | | 1 | 2 | 1 | 2 | 3 | 4 |
| Titanium oxide dispersion No. | | (i) | (ii) | (iii) | (iv) | (v) | (vi) |
| Solid solution content (relative to 100 mol% titanium) | Tin (mol%) | 4.0 | 6.0 | - | 4.0 | - | 4.0 |
| | Manganese (mol%) | 0.5 | 2.0 | - | - | 2.0 | 0.0 |
| | Vanadium (mol%) | - | - | - | - | - | 0.5 |
| Average particle size (nm) | | 7 | 14 | 20 | 5 | 17 | 9 |
| Crystal type | | rutile | rutile | anatase | rutile | anatase | rutile |
| Self-cleaning test | Initial contact angle θ (°) | 63 | 65 | 63 | 63 | 88 | 63 |
| | Contact angle θ after 6 hour exposure (°) | 33 | 52 | >5 | 7 | 32 | 15 |
| | Change of contact angle θ (%) | 48 | 20 | >92 | 89 | 64 | 76 |

As oleic acid on the thin film surface is decomposed by photocatalytic action, the thin film surface gradually turns hydrophilic, so that the water contact angle gradually decreases. Namely, a titanium oxide dispersion showing a less decrease of water contact angle indicates suppression of photocatalytic activity. The titanium oxide dispersions (i) and (ii) of Synthesis Examples 1 and 2 used as the base in Examples showed a change of contact angle of less than 50%, more preferably less than 30%, demonstrating suppressed photocatalytic activity.

Preparation of core/shell type titanium oxide particle dispersion

Example 1

Preparation of core/shell type titanium oxide particle water dispersion (CS-i)

A separable flask equipped with a magnetic stirrer and thermometer was charged with 100 parts of titanium oxide dispersion (i) in Synthesis Example 1, 10 parts of ethanol, and 0.2 part of ammonia at room temperature, followed by magnetic stirring. The separable flask was placed in an ice bath and cooled until the temperature of the contents reached 5°C. Tetraethoxysilane, 1.8 parts, was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. After heating, the reactor was cooled to room temperature in a water bath. The liquid was poured into a round bottom flask and concentrated by batchwise vacuum distillation. After concentration, the liquid was kept in contact with 10 parts of Amberlite® 200CT (Organo Co., Ltd.) for 3 hours. The mixture was filtered by filter paper (Advantec 2B) to remove the ion exchange resin. The filtrate was a core/shell type titanium oxide solid-solution particle water dispersion (CS-i). A given amount of the dispersion (CS-i) was weighed by a precision balance (AUX-220 by Shimadzu Corp.) and treated in an oven (Perfect Oven by Espec Corp.) at 105°C for 3 hours for volatilizing the dispersing solvent. It was then confirmed that the dispersion had a solid concentration of 15 wt%. After the dispersion (CS-i) was diluted to a solid concentration of 1 wt%, the average particle size ($D_{50}$) was measured as above, finding a size $D_{50}$ of 16.1 nm. Also after the dispersion (CS-i) was diluted to a solid concentration of 1 wt%, UV/visible transmission spectrum was measured to find a transmittance of 90% at 550 nm, indicating satisfactory transparency. Further, the methylene blue fading test was performed by adding methylene blue (Wako, special grade) to a 0.5 wt% core/shell type tetragonal titanium oxide particle water dispersion in a concentration of 0.01 mmol/L, filling a borosilicate glass vial with the dispersion, irradiating black light (irradiation intensity 0.5 mW/cm$^2$) for 24 hours, and colorimetric analysis at 653 nm. A decline of absorbance was within 10%.

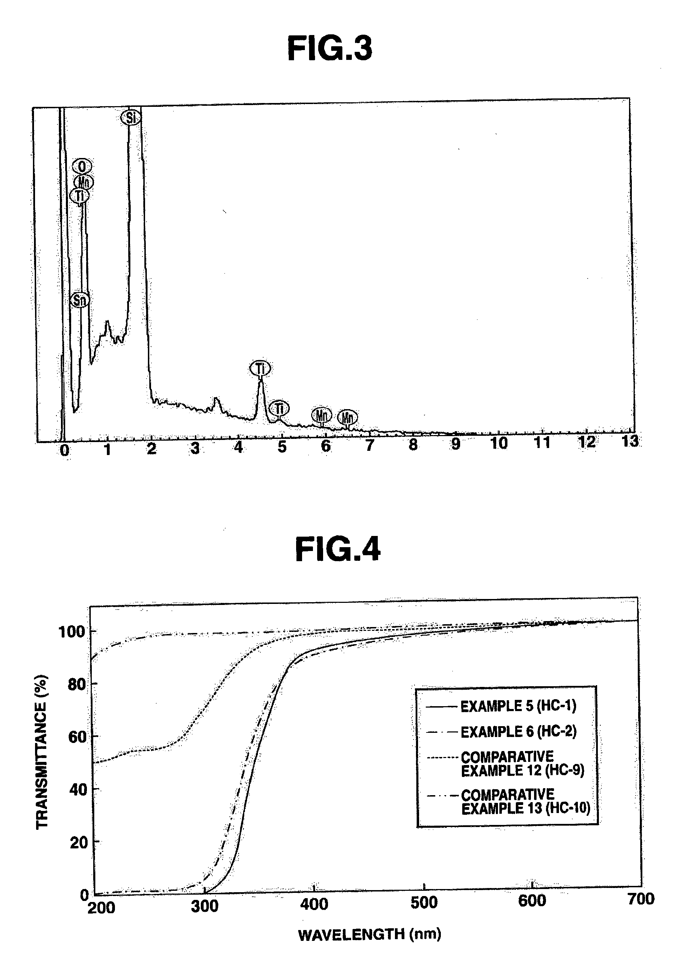

Elemental analysis was carried out on the dispersion (CS-i) prepared in Example 1, by energy dispersive X-ray spectroscopy (HD-2700 by Hitachi High-Technologies Corp.). The results are shown in the diagram of FIG. 3. It is seen from FIG. 3 that the majority of elemental distribution on core/shell type particle surfaces is silicon derived from silicon oxide.

Example 2

Preparation of core/shell type titanium oxide particle dispersion (CS-ii)

The same procedure as in Example 1 was repeated except that titanium oxide dispersion (ii) in Synthesis Example 2 was used instead of titanium oxide dispersion (i) in Synthesis Example 1. Analysis of the resulting dispersion (CS-ii) revealed a solid concentration of 15 wt%, an average particle size ($D_{50}$) of 22.3 nm, and a decline of absorbance within 10% in the methylene blue fading test.

Example 3

Preparation of core/shell type titanium oxide particle dispersion (CS-iii)

The same procedure as in Example 1 was repeated except that 20 parts of ethanol was used instead of 10 parts of ethanol. Analysis of the resulting dispersion (CS-iii) revealed a solid concentration of 15 wt%, an average particle size ($D_{50}$) of 29.3 nm, and a decline of absorbance within 10% in the methylene blue fading test.

Example 4

Preparation of core/shell type titanium oxide particle dispersion (CS-iv)

The same procedure as in Example 1 was repeated except that 50 parts of ethanol was used instead of 10 parts of ethanol. Analysis of the resulting dispersion (CS-iv) revealed a solid concentration of 15 wt%, an average particle size ($D_{50}$) of 41.5 nm, and a decline of absorbance within 10% in the methylene blue fading test.

Comparative Example 1

Preparation of core/shell type titanium oxide particle dispersion (CS-v)

The same procedure as in Example 1 was repeated except that 150 parts of ethanol was used instead of 10 parts of ethanol. Analysis of the resulting dispersion (CS-v) revealed a solid concentration of 15 wt% and an average particle size ($D_{50}$) of 155.4 nm.

Comparative Example 2

Preparation of core/shell type titanium oxide particle dispersion (CS-vi)

The same procedure as in Example 1 was repeated except that titanium oxide dispersion (iii) in Comparative Synthesis Example 1 was used instead of titanium oxide dispersion (i) in Synthesis Example 1. Analysis of the resulting dispersion (CS-vi) revealed a solid concentration of 15 wt%, an average particle size ($D_{50}$) of 34.6 nm, and a decline of absorbance of 44% in the methylene blue fading test.

Comparative Example 3

Preparation of core/shell type titanium oxide particle dispersion (CS-vii)

The same procedure as in Example 1 was repeated except that titanium oxide dispersion (iv) in Comparative Synthesis Example 2 was used instead of titanium oxide dispersion (i) in Synthesis Example 1. Analysis of the resulting dispersion (CS-vii) revealed a solid concentration of 15 wt%, an average particle size ($D_{50}$) of 16.8 nm, and a decline of absorbance of 89% in the methylene blue fading test.

Comparative Example 4

Preparation of core/shell type titanium oxide particle dispersion (CS-viii)

The same procedure as in Example 1 was repeated except that titanium oxide dispersion (v) in Comparative Synthesis Example 3 was used instead of titanium oxide dispersion (i) in Synthesis Example 1. Analysis of the resulting dispersion (CS-viii) revealed a solid concentration of 15 wt%, an average particle size ($D_{50}$) of 25.5 nm, and a decline of absorbance of 20% in the methylene blue fading test.

Comparative Example 5

Preparation of core/shell type titanium oxide particle dispersion (CS-ix)

The same procedure as in Example 1 was repeated except that titanium oxide dispersion (vi) in Comparative Synthesis Example 4 was used instead of titanium oxide dispersion (i) in Synthesis Example 1. Analysis of the resulting dispersion (CS-ix) revealed a solid concentration of 15 wt%, an average particle size ($D_{50}$) of 23.2 nm, and a decline of absorbance of 76% in the methylene blue fading test.

Comparative Example 6

Attempt to prepare core/shell type titanium oxide particle dispersion (CS-x)

The same procedure as in Example 1 was repeated except that polymeric dispersant-laden titanium oxide dispersion (vii) in Comparative Synthesis Example 5 was used instead of titanium oxide dispersion (i) in Synthesis Example 1. The thus obtained dispersion contained titanium oxide particles having an average particle size of 200 nm, which gradually settled down. A comparison of Example 1 with Comparative Example 6 indicates that the method of preparing a core/shell type titanium oxide particle dispersion according to the invention is not applicable to the polymeric dispersant-laden system.

Comparative Example 7

Attempt to prepare core/shell type titanium oxide particle dispersion (CS-xi)

The same procedure as in Example 1 was repeated except that the mixture was heated in an oil bath instead of microwave heating. The oil bath was at a temperature of 120°C, and it took 30 minutes until the temperature of the contents reached 80°C. The thus obtained dispersion contained titanium oxide particles having an average particle size of 300 nm, which gradually settled down. A comparison of Example 1 with Comparative Example 7 indicates that rapid heating is essential for the method of preparing a core/shell type titanium oxide particle dispersion according to the invention.

Evaluation of core shell type titanium oxide particle dispersion

The core/shell type titanium oxide particle dispersions (CS-i) to (CS-xi) were evaluated by the following tests. Note that the average particle size was measured by the same method as in Synthesis Examples.

Methylene blue decomposition test

The decomposition of methylene blue was examined by adding methylene blue to a 0.5 wt% core/shell type titanium oxide particle dispersion in a concentration of 0.01 mmol/L, filling a borosilicate glass vial with the dispersion, irradiating black light (irradiation intensity 0.5 mW/cm$^2$, as measured by EYE UV illuminometer UVP365-1 of Iwasaki Electric Co., Ltd.) for 24 hours, and colorimetric analysis. A percent decline of absorbance at 653 nm was computed. For those samples whose transparency was evaluated poor, the test was no longer carried out, which is expressed by "-" in Table 2.

Transparency

Transparency was evaluated by measuring UV/visible transmission spectrum of a 1.0 wt% core/shell type titanium oxide particle dispersion. A sample is rated good "○" when the transmittance at 550 nm is 80% or higher, and poor "×" when the transmittance is less than 80%.

Table 2

| | Example | | | | Comparative Example | | | | | | |
|---|---|---|---|---|---|---|---|---|---|---|---|
| | 1 | 2 | 3 | 4 | 1 | 2 | 3 | 4 | 5 | 6 | 7 |
| Core/shell type titanium oxide particle dispersion No. | CS-i | CS-ii | CS-iii | CS-iv | CS-v | CS-vi | CS-vii | CS-viii | CS-ix | CS-x | CS-xi |
| Average particle size (nm) | 16.1 | 22.3 | 29.3 | 41.5 | 155.4 | 34.6 | 16.8 | 25.5 | 23.2 | 200 | 300 |
| Methylene blue decomposition (%) | <10 | <10 | <10 | <10 | - | 44 | 89 | 20 | 76 | - | - |
| Transparency | ○ | ○ | ○ | ○ | × | ○ | ○ | ○ | ○ | × | × |

Preparation of silicone hardcoat composition

Example 5

Preparation of silicone hardcoat composition (HC-1)

A 500-mL flask was charged with 50 g of methyltrimethoxysilane (tradename KBM-13 by Shin-Etsu). A mixture of 30 g of Snowtex® O (Nissan Chemical Industries, Ltd., water dispersed silica sol, average particle size 15-20 nm, SiO$_2$ content 20 wt%), 30 g of core/shell type titanium oxide particle dispersion (CS-i) having a solid concentration of 15 wt% prepared in Example 1, and 0.3 g of acetic acid was added to the flask. As the mixture was added, exothermic heat due to hydrolysis was observed, and the internal temperature rose to 50°C. At the end of addition, the contents were stirred at 60°C for 3 hours to drive hydrolysis to completion.

Thereafter, 56 g of cyclohexanone was admitted to the flask, which was heated up to a liquid temperature of 92°C under atmospheric pressure for distilling off methanol formed by hydrolysis and for effecting condensation. To the flask were added 75 g of isopropanol as diluent, 0.1 g of KP-341 (Shin-Etsu) as leveling agent, 0.3 g of acetic acid, and 0.8 g of 10 wt% tetrabutylammonium hydroxide aqueous solution (Wako, special grade). Subsequent stirring and filtration through filter paper yielded 200 g of a silicone hardcoat composition (HC-1) having a nonvolatile concentration of 20 wt%.

Example 6

Preparation of silicone hardcoat composition (HC-2)

The same procedure as in Example 5 was repeated except that dispersion (CS-ii) in Example 2 was used instead of the core/shell type titanium oxide particle dispersion (CS-i), yielding a silicone hardcoat composition (HC-2).

Example 7

Preparation of silicone hardcoat composition (HC-3)

The same procedure as in Example 5 was repeated except that a mixture of 49.5 g of methyltrimethoxysilane and 0.5 g of 1,8-bis(trimethoxysilyl)-3,3,4,4,5,5,6,6-octafluorooctane was used instead of 50 g of methyltrimethoxysilane, yielding a silicone hardcoat composition (HC-3).

Example 8

Preparation of silicone hardcoat composition (HC-4)

The same procedure as in Example 5 was repeated except that a mixture of 49.5 g of methyltrimethoxysilane and 0.5 g of 1,4-bis(trimethoxysilyl)benzene was used instead of 50 g of methyltrimethoxysilane, yielding a silicone hardcoat composition (HC-4).

Comparative Example 8

Preparation of silicone hardcoat composition (HC-5)

The same procedure as in Example 5 was repeated except that dispersion (CS-vi) in Comparative Example 2 was used instead of the core/shell type titanium oxide particle dispersion (CS-i), yielding a silicone hardcoat composition (HC-5).

Comparative Example 9

Preparation of silicone hardcoat composition (HC-6)

The same procedure as in Example 5 was repeated except that dispersion (CS-vii) in Comparative Example 3 was used instead of the core/shell type titanium oxide particle dispersion (CS-i), yielding a silicone hardcoat composition (HC-6).

Comparative Example 10

Preparation of silicone hardcoat composition (HC-7)

The same procedure as in Example 5 was repeated except that dispersion (CS-viii) in Comparative Example 4 was used instead of the core/shell type titanium oxide particle dispersion (CS-i), yielding a silicone hardcoat composition (HC-7).

Comparative Example 11

Preparation of silicone hardcoat composition (HC-8)

The same procedure as in Example 5 was repeated except that dispersion (CS-ix) in Comparative Example 5 was used instead of the core/shell type titanium oxide particle dispersion (CS-i), yielding a silicone hardcoat composition (HC-8).

Comparative Example 12

Preparation of silicone hardcoat composition (HC-9)

A silicone resin (tradename KR-220L by Shin-Etsu), 10 g, was combined with 100 g of titanium oxide-manganese composite dispersion (viii) (titanium oxide-manganese composite solids 1 wt%) prepared in Comparative Synthesis Example 6, 200 g of isopropyl alcohol, 100 g of diacetone alcohol, and 0.3 g of 10% tetrabutylammonium hydroxide aqueous solution. The contents were mixed to form a silicone hardcoat composition (HC-9). Composition (HC-9) is a reference for comparing the UV-shielding capability of cured film with Examples 5 to 8. The weight ratio of titanium oxide to silicone resin in the cured film is equivalent to Examples 5 to 8.

Comparative Example 13

Preparation of silicone hardcoat composition (HC-10)

The same procedure as in Example 5 was repeated except that deionized water was used instead of the core/shell type titanium oxide particle dispersion (CS-i), yielding a silicone hardcoat composition (HC-10).

Comparative Example 14

Preparation of silicone hardcoat composition (HC-11)

To the silicone hardcoat composition (HC-10) prepared in Comparative Example 13, 30 g of an inorganic UV absorber based on titanium oxide similar to Patent Document 9 (JP-A 2012-77267) (commercially available as RTTDNB-E88 from CIK Nanotek Co., Ltd., solids 15 wt%) was added, yielding a silicone hardcoat composition (HC-11).

Evaluation of silicone hardcoat composition

The silicone hardcoat compositions HC-1 to HC-11 prepared above were evaluated by the following tests. The results are shown in Table 3.

UV-shielding capability

A quartz plate (Fujiwara Mfg. Co., Ltd., 40 mm long by 10 mm wide by 1 mm thick) was coated on one surface of 40 mm long by 10 mm wide with a silicone hardcoat composition HC-1 (Example 5), HC-2 (Example 6), HC-9 (Comparative Example 12) or HC-10 (Comparative Example 13). The plate was kept upright at room temperature for 15 minutes, with one side of 10 mm wide by 1 mm thick at the bottom. After standing, the plate was heated at 120°C for 1 hour to cure the coating.
The thickness of the cured film was measured using a high-speed Fourier transform thin-film interferometer (F-20 by Filmetrics, Inc.), finding that all cured films had a thickness of $5 \times 10^{-6}$ m. The quartz plate covered with the cured film was measured for transmittance by a UV/visible spectrophotometer (Shimadzu Corp.), with the results shown in FIG. 4. It is seen from FIG. 4 that the hardcoat films of Examples 5 and 6 have good transparency in the visible region (400-700 nm) and good shielding in the UV region (200-400 nm), whereas the hardcoat films of Comparative Examples 12 and 13 have poor shielding in the UV region (200-400 nm). The same experiment was conducted on the other silicone hardcoat compositions. On measurement of UV/visible transmission spectrum of the cured film on quartz plate, those samples exhibiting a transmittance of at least 90% in the region of 400-700 nm and up to 10% in the region of 200-300 nm are rated good (○), while those samples falling outside these transmittance values are rated reject (×) in terms of UV-shielding capability.

Transparency, adhesion, mar resistance

A known acrylic primer (JP 4041968) was coated on one surface of a polycarbonate substrate of 0.5 mm thick (Iupilon® sheet, Mitsubishi Engineering-Plastics Corp.) and cured under standard conditions to form a cured film on the substrate, which is designated substrate A. Each of silicone hardcoat compositions HC-1 to HC-11 (Examples 5 to 8 and Comparative Examples 8 to 14) was flow coated on the primer layer on substrate A and cured. The thickness of the cured films was measured using a high-speed Fourier transform thin-film interferometer (F-20 by Filmetrics, Inc.). For all samples, the primer layer had a thickness of $1\times10^{-5}$ m and the hardcoat layer had a thickness of $5\times10^{-6}$ m.

Transparency

The haze of the cured film was measured by a haze meter NDH2000 (Nippon Denshoku Industries Co., Ltd.). Those samples having a haze value of up to 1 are rated good (○).

Initial adhesion

Adhesion was analyzed by a cross-hatch adhesion test according to JIS K5400, specifically by scribing the sample with a razor along 6 longitudinal and 6 transverse lines at a spacing of 2 mm to define 25 square sections, tightly attaching adhesive tape (Cellotape by Nichiban Co., Ltd.) thereto, rapidly pulling back the adhesive tape at an angle of 90°, and counting the number (X) of coating sections kept unpeeled. The result is expressed as X/25. Those samples having a X/25 value wherein X=25 are rated good (○) whereas those samples having a X/25 value wherein X < 25 are rated reject (×).

Appearance and adhesion after water immersion

The sample was immersed in boiling water for 2 hours, after which it was visually observed for appearance and examined for adhesion by the adhesion test as above. With respect to appearance after water immersion, those samples remaining unchanged in outer appearance before and after boiling are rated good (○) whereas those samples whose cured film is deteriorated are rated poor (×). With respect to adhesion after water immersion, those samples having a X/25 value wherein X=25 are rated good (○) whereas those samples having a X/25 value wherein X < 25 are rated reject (×), provided that the cross-hatch adhesion test (JIS K5400) is conducted after boiling.

Mar resistance

Mar resistance was analyzed according to ASTM D1044 by mounting a Taber abrasion tester with wheels CS-10F, measuring a haze after 500 turns under a load of 500 g, measuring haze by a haze meter NDH2000 (Nippon Denshoku Industries Co., Ltd.), and calculating a haze difference (ΔHz) before and after the test. Those samples giving a haze difference (ΔHz) of up to 10 are rated good (○) whereas those samples giving a ΔHz of more than 10 are rated reject (×).

Weather resistance

A known acrylic primer (JP 4041968) was coated on one surface of a polycarbonate substrate of 5.0 mm thick (PCSP-660T, Takiron Co., Ltd.) and cured under standard conditions to form a cured film on the substrate, which is designated substrate B. Each of silicone hardcoat compositions HC-1 to HC-8, HC-10 and HC-11 (Examples 5 to 8 and Comparative Examples 8 to 11, 13, and 14) was flow coated on the primer layer on substrate B and cured. The thickness of the cured films was measured using a high-speed Fourier transform thin-film interferometer (F-20 by Filmetrics, Inc.). For all samples, the primer layer had a thickness of $1\times10^{-5}$ m and the hardcoat layer had a thickness of $5\times10^{-6}$ m.

Prior to setting of conditions for a weathering test, an outdoor UV dose was measured using a UV illuminometer (EYE UV illuminometer UVP365-1 by Iwasaki Electric Co., Ltd.). When measured at noon on fine Vernal Equinox Day (20th March, 2012) at Matsuida, Annaka City, Gunma Pref., Japan, the UV dose was $1\times10^{1}$ W/m$^2$. This UV dose is typical in consideration of the prior art report (International Commission on Illumination, 20, 47 (1972), CIE Publication). In the practice of the invention, the weather resistance of a cured film is set so as to correspond to outdoor exposure over 10 years. Assume that the annual average daily sunshine time is 12 hours, the accumulative energy quantity is estimated to be 12 (h/day) $\times$ 365 (day/year) $\times$ 10 (year) $\times$ 10 (W/m$^2$) = 438 (kWh/m$^2$). With a margin secured, the outdoor accumulative energy quantity over 10 years is approximated to be 500 kWh/m$^2$. To acquire test results in a short time, an experiment was conducted over a test time of 500 hours using a tester having an illumination intensity of $1\times10^{3}$ W/m$^2$.

After the conditions of the weathering test were set as above, the cured film coated and cured to substrate B was evaluated for weather resistance, using EYE Super UV tester W-151 (Iwasaki Electric Co., Ltd.). As mentioned above, the test was in an environment including UV radiation at an intensity of $1 \times 10^3$ W/m$^2$, a temperature of 60°C, and a humidity of 50% RH. A time passed until cracks or fissures formed in the cured film under the conditions was recorded. For those samples in which other test items were evaluated poor, the weathering test was no longer carried out, which is expressed by "-" in Table 3.

Table 3

| Test item | Example | | | | Comparative Example | | | | | | |
|---|---|---|---|---|---|---|---|---|---|---|---|
| | 5 | 6 | 7 | 8 | 8 | 9 | 10 | 11 | 12 | 13 | 14 |
| Silicone hardcoat composition No. | HC-1 | HC-2 | HC-3 | HC-4 | HC-5 | HC-6 | HC-7 | HC-8 | HC-9 | HC-10 | HC-11 |
| UV-shielding capability | ○ | ○ | ○ | ○ | ○ | ○ | ○ | ○ | × | × | ○ |
| Coating transparency | ○ | ○ | ○ | ○ | ○ | ○ | ○ | ○ | ○ | ○ | ○ |
| Initial adhesion | ○ | ○ | ○ | ○ | ○ | ○ | ○ | ○ | ○ | ○ | ○ |
| Appearance after water immersion | ○ | ○ | ○ | ○ | ○ | ○ | ○ | ○ | × | ○ | ○ |
| Adhesion after water immersion | ○ | ○ | ○ | ○ | ○ | ○ | ○ | ○ | ○ | ○ | × |
| Mar resistance | ○ | ○ | ○ | ○ | ○ | ○ | ○ | ○ | × | ○ | ○ |
| Weathering time (hr) | 500 | 500 | 500 | 500 | 250 | 200 | 300 | 300 | - | 200 | 500 |

For the silicone hardcoat compositions HC-1 to HC-4 (Examples 5 to 8), no cracks formed in the cured film even after 500 hours of the weathering test. For the silicone hardcoat compositions HC-5 to HC-8 and HC-10 (Comparative Examples 8 to 11 and 13), cracks formed in the cured film in less than 500 hours. The composition HC-11 (Comparative Example 14) showed weather resistance equivalent to Examples 5 to 8, but poor adhesion after water immersion.

Notes

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the particle dispersion, coating composition, coated article and methods of making and using them constitutes the proposal of general combinations of those general preferences and options for the different features, insofar as they are combinable and compatible and are put forward in the same context.

**Claims**

1. A core/shell type tetragonal titanium oxide particle water dispersion in which core/shell type tetragonal titanium oxide solid-solution particles consisting of a nanosized core of tetragonal titanium oxide having tin and manganese incorporated in solid solution and a shell of silicon oxide around the core are dispersed in an aqueous dispersing medium, wherein
the cores have a 50% by volume cumulative distribution diameter $D_{50}$ of not more than 30 nm, and the core/shell type titanium oxide particles have a 50% by volume cumulative distribution diameter $D_{50}$ of not more than 50 nm, as measured by dynamic light scattering method using laser light,

the amount of tin incorporated in solid solution providing a molar ratio of titanium to tin (Ti/Sn) of 10/1 to 1,000/1, and the amount of manganese incorporated in solid solution providing a molar ratio of titanium to manganese (Ti/Mn) of 10/1 to 1,000/1.

2. The core/shell type tetragonal titanium oxide particle water dispersion of claim 1 which is free of any dispersant other than ammonia, alkali metal hydroxides, phosphates, hydrogenphosphates, carbonates and hydrogencarbonates.

3. A core/shell type tetragonal titanium oxide particle water dispersion of claim 1 or 2, which when adjusted to a concentration of 1% by weight gives a transmittance of at least 80% when measured by transmitting light of wavelength 550 nm through a quartz cell having an optical path length of 1 mm.

4. A method for preparing a core/shell type tetragonal titanium oxide particles in which core/shell type tetragonal titanium oxide solid-solution particles consisting of a nanosized core of tetragonal titanium oxide having tin and manganese incorporated in solid solution and a shell of silicon oxide around the core are dispersed in an aqueous dispersing medium, wherein the cores have a 50% by volume cumulative distribution diameter $D_{50}$ of up to 30 nm, and the core/shell type titanium oxide particles have a 50% by volume cumulative distribution diameter $D_{50}$ of up to 50 nm, both as measured by the dynamic light scattering method using laser light, the amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1, the method comprising the steps of:

(A) blending a dispersion of tetragonal titanium oxide nanoparticles having tin and manganese incorporated in solid solution with a monohydric alcohol, ammonia, and a tetraalkoxysilane,
(B) rapidly heating the mixture of step (A) to form core/shell type tetragonal titanium oxide solid-solution particles consisting of a core of tetragonal titanium oxide having tin and manganese incorporated in solid solution and a shell of silicon oxide around the core,
(C) removing water from the core/shell type tetragonal titanium oxide particle water dispersion of step (B) to concentrate the dispersion, and
(D) removing ammonia therefrom.

5. The method of claim 4 wherein step (A) includes adding not more than 100 parts by weight of the monohydric alcohol to 100 parts by weight of the dispersion of tetragonal titanium oxide nanoparticles having tin and manganese incorporated in solid solution.

6. The method of claim 4 or 5 wherein the monohydric alcohol used in step (A) is at least one member selected from the group consisting of methanol, ethanol, propanol and isopropyl alcohol.

7. The method of any one of claims 4 to 6 wherein the rapid heating of step (B) is heating within a time of 10 minutes.

8. The method of any one of claims 4 to 7 wherein step (B) includes microwave heating.

9. The method of any one of claims 4 to 8 wherein step (C) includes atmospheric concentration, vacuum concentration, ultrafiltration or a combination thereof.

10. The method of any one of claims 4 to 9 wherein step (D) uses a cation exchange resin for ammonia removal.

11. A UV-shielding silicone coating composition comprising

(I) core/shell type tetragonal titanium oxide particles as defined in claim 1, 2 or 3,
(II) a silicone resin obtained from (co)hydrolytic condensation of at least one member selected from the group consisting of an alkoxysilane having the general formula (1):

$$(R^1)_m(R^2)_n Si(OR^3)_{4-m-n} \qquad (1)$$

wherein $R^1$ and $R^2$ are each independently hydrogen or a substituted or unsubstituted monovalent hydrocarbon

group, $R^1$ and $R^2$ may bond together, $R^3$ is $C_1$-$C_3$ alkyl, m and n each are 0 or 1, m+n is 0, 1 or 2, an alkoxysilane having the general formula (2):

$$Y[Si(R^4)_m(R^5)_n(OR^6)_{3-m-n}]_2 \qquad (2)$$

wherein Y is a divalent organic group selected from the group consisting of $C_1$-$C_{10}$ alkylene, $C_1$-$C_{10}$ perfluoro-alkylene, $C_1$-$C_{10}$ di(ethylene)perfluoroalkylene, phenylene, and biphenylene, $R^4$ and $R^5$ are each independently hydrogen or a substituted or unsubstituted monovalent hydrocarbon group, $R^4$ and $R^5$ may bond together, $R^6$ is $C_1$-$C_3$ alkyl, m and n each are 0 or 1, m+n is 0, 1 or 2, and partial hydrolytic condensates thereof,
(III) a curing catalyst,
(IV) a solvent, and optionally,
(V) colloidal silica,

the solids of the core/shell type tetragonal titanium oxide particles (I) being present in an amount of 1 to 30% by weight based on the solids of the silicone resin (II).

12. The silicone coating composition of claim 11 wherein component (III) is present in a sufficient amount to cure the silicone resin (II), and component (IV) is present in such an amount that the silicone coating composition may have a solid concentration of 1 to 30% by weight.

13. The silicone coating composition of claim 11 or 12 wherein the colloidal silica (V) is present in an amount of 5 to 100 parts by weight per 100 parts by weight of the solids of silicone resin (II).

14. The silicone coating composition of any one of claims 11 to 13 wherein

(i) when the silicone coating composition is coated and cured onto a vinyl copolymer layer on an organic resin substrate to form a cured film 3 to 20 $\mu$m thick, the cured film is crack resistant even after exposure to UV radiation at an intensity of $1 \times 10^3$ W/m$^2$ for 500 hours,
and/or
(ii) when the silicone coating composition is coated and cured onto quartz to form a cured film 5 $\mu$m thick, the cured film has a light transmittance of at least 90% in a wavelength range of 400 nm to 700 nm.

15. A method comprising making a silicone coating composition of any one of claims 11 to 14, by combining the specified components thereof.

16. A coated article comprising a substrate and a cured film of a UV-shielding silicone coating composition of any one of claims 11 to 14 coated on at least one surface of the substrate, directly or via another layer.

17. A coated article of claim 16 wherein the substrate is an organic resin substrate.

18. A coated article of claim 16 comprising
an organic resin substrate,
a primer film disposed on at least one surface of the substrate, the primer film comprising a vinyl copolymer having an organic UV-absorbing group and an alkoxysilyl group on side chain, and
said cured film of the UV-shielding silicone coating composition of any one of claims 11 to 14 on the primer film.

**Patentansprüche**

1. Dispersion aus tetragonalen Titanoxidteilchen des Kern-/Hülltyps in Wasser, in der die tetragonalen Titanoxidteilchen des Kern-/Hülltyps der festen Lösung, die aus einem Kern im Nanometerbereich aus tetragonalem Titanoxid mit in fester Lösung inkorporiertem Zinn und Mangan und einer Hülle aus Siliciumoxid um den Kern bestehen, in einem wässrigen Dispersionsmedium dispergiert sind, wobei
die Kerne einen kumulativen 50-Vol.-%-Verteilungsdurchmesser $D_{50}$ von nicht mehr als 30 nm aufweisen und die Titanoxidteilchen des Kern-/Hülltyps einen kumulativen 50-Vol.-%-Verteilungsdurchmesser $D_{50}$ von nicht mehr als 50 nm aufweisen, gemessen durch das dynamische Lichtstreuverfahren unter Verwendung von Laserlicht,
die in der festen Lösung inkorporierte Menge Zinn ein Molverhältnis von Titan zu Zinn (Ti/Sn) von 10/1 bis 1.000/1 bereitstellt und die in der festen Lösung inkorporierte Menge Mangan ein Molverhältnis von Titan zu Mangan (Ti/Mn) von 10/1 bis 1.000/1 bereitstellt.

2. Dispersion aus tetragonalen Titanoxidteilchen des Kern-/Hülltyps in Wasser nach Anspruch 1, die frei ist von jedem Dispergiermittel außer Ammoniak, Alkalimetallhydroxiden, Phosphaten, Hydrogenphosphaten, Carbonaten und Hydrogencarbonaten.

3. Dispersion aus tetragonalen Titanoxidteilchen des Kern-/Hülltyps in Wasser nach Anspruch 1 oder 2, die bei Einstellung auf eine Konzentration von 1 Gew.-% eine Durchlässigkeit von zumindest 80 % ergibt, gemessen durch die Transmission von Licht mit einer Wellenlänge von 550 nm durch eine Quarzzelle mit einer optischen Weglänge von 1 mm.

4. Verfahren zur Herstellung von tetragonalen Titanoxidteilchen es Kern-/Hülltyps, worin die tetragonalen Titanoxidteilchen des Kern-/Hülltyps der festen Lösung, die aus einem Kern im Nanometerbereich aus tetragonalem Titanoxid mit in fester Lösung inkorporierten Zinn und Mangan und einer Hülle aus Siliciumoxid um den Kern bestehen, in einem wässrigen Dispersionsmedium dispergiert sind, wobei die Kerne einen kumulativen 50-Vol.-%-Verteilungsdurchmesser $D_{50}$ von bis zu 30 nm aufweisen und die Titanoxidteilchen des Kern-/Hülltyps einen kumulativen 50-Vol.-%-Verteilungsdurchmesser $D_{50}$ von bis zu 50 nm aufweisen, jeweils durch das dynamische Lichtstreuverfahren unter Verwendung von Laserlicht gemessen, wobei die in der festen Lösung inkorporierte Menge Zinn ein Molverhältnis von Titan zu Zinn (Ti/Sn) von 10/1 bis 1.000/1 bereitstellt und die in der festen Lösung inkorporierte Menge Mangan ein Molverhältnis von Titan zu Mangan (Ti/Mn) von 10/1 bis 1.000/1 bereitstellt,
wobei das Verfahren die folgenden Schritte umfasst:

(A) das Mischen der Dispersion aus tetragonalen Titanoxidnanoteilchen, die in fester Lösung inkorporiertes Zinn und Mangan aufweisen, mit einem einwertigen Alkohol, Ammoniak und einem Tetraalkoxysilan,
(B) das rasche Erhitzen des Gemisches aus Schritt (A), um tetragonale Titanoxidteilchen des Kern-/Hülltyps der festen Lösung auszubilden, die aus einem Kern aus tetragonalem Titanoxid mit in fester Lösung inkorporiertem Zinn und Mangan und einer Hülle aus Siliciumoxid um den Kern bestehen,
(C) das Entfernen von Wasser aus der Dispersion aus tetragonalen Titanoxidteilchen des Kern-/Hülltyps in Wasser aus Schritt (B), um die Dispersion einzuengen, und
(D) das Entfernen des Ammoniaks daraus.

5. Verfahren nach Anspruch 4, wobei Schritt (A) das Hinzufügen von nicht mehr als 100 Gewichtsteilen des einwertigen Alkohols zu 100 Gewichtsteilen der Dispersion aus tetragonalen Titanoxidnanopartikeln, die in fester Lösung inkorporiertes Zinn und Mangan aufweisen, umfasst.

6. Verfahren nach Anspruch 4 oder 5, wobei der in Schritt (A) verwendete einwertige Alkohol zumindest ein Element ausgewählt aus der Gruppe bestehend aus Methanol, Ethanol, Propanol und Isopropanol ist.

7. Verfahren nach einem der Ansprüche 4 bis 6, wobei das rasche Erhitzen aus Schritt (B) ein Erhitzen innerhalb einer Zeitspanne von 10 Minuten ist.

8. Verfahren nach einem der Ansprüche 4 bis 7, wobei Schritt (B) das Erhitzen mittels Mikrowelle umfasst.

9. Verfahren nach einem der Ansprüche 4 bis 8, wobei Schritt (C) atmosphärisches Einengen, Vakuumeinengen, Ultrafiltration oder eine Kombination daraus umfasst.

10. Verfahren nach einem der Ansprüche 4 bis 9, wobei Schritt (D) ein Kationenaustauscharz für die Ammoniakentfernung verwendet.

11. UV-abschirmende Silikonbeschichtungszusammensetzung, umfassend

(I) tetragonale Titanoxidteilchen des Kern-/Hülltyps wie in Anspruch 1, 2 oder 3 definiert,
(II) ein Silikonharz, erhalten durch (co)hydrolytische Kondensation von zumindest einem Mitglied, ausgewählt aus der Gruppe bestehend aus einem Alkoxysilan mit der allgemeinen Formel (1):

$$(R^1)_m(R^2)_n Si(OR^3)_{4-m-n} \qquad (1)$$

wobei $R^1$ und $R^2$ jeweils unabhängig Wasserstoff oder eine substituierte oder unsubstituierte einwertige Koh-

lenwasserstoffgruppe sind, $R^1$ und $R^2$ aneinander binden können, $R^3$ ein $C_1$-$C_3$-Alkyl ist, m und n jeweils 0 oder 1 sind, m+n = 0, 1 oder 2 ist, einem Alkoxysilan mit der allgemeinen Formel (2):

$$Y[Si(R^4)_m(R^5)_n(OR^6)_{3-m-n}]_2 \qquad (2)$$

wobei Y eine zweiwertige organische Gruppe ausgewählt aus der Gruppe bestehend aus $C_1$-$C_{10}$-Alkylen, $C_1$-$C_{10}$-Perfluoralkylen, $C_1$-$C_{10}$-Di(ethylen)perfluoralkylen, Phenylen, und Biphenylen ist, $R^4$ und $R^5$ jeweils unabhängig Wasserstoff oder eine substituierte oder unsubstituierte einwertige Kohlenwasserstoffgruppe sind, $R^4$ und $R^5$ aneinander binden können, $R^6$ ein $C_1$-$C_3$-Alkyl ist, m und n jeweils 0 oder 1 sind, m+n = 0, 1 oder 2 ist, und partielle hydrolytische Kondensate davon,
(III) einen Härtungskatalysator,
(IV) ein Lösungsmittel und gegebenenfalls
(V) kolloides Silica,

wobei die Feststoffe der tetragonalen Titanoxidpartikel des Kern-/Hülltyps (I) in einer Menge von 1 bis 30 Gew.-% bezogen auf die Feststoffe des Silikonharzes (II) vorliegen.

12. Silikonbeschichtungszusammensetzung nach Anspruch 11, wobei Bestandteil (III) in einer ausreichenden Menge vorliegt, um das Silikonharz (II) zu härten, und Bestandteil (IV) in einer solchen Menge vorliegt, dass die Silikonbeschichtungszusammensetzung eine Feststoffkonzentration von 1 bis 30 Gew.-% aufweisen kann.

13. Silikonbeschichtungszusammensetzung nach Anspruch 11 oder 12, wobei das kolloide Silica (V) in einer Menge von 5 bis 100 Gewichtsteilen pro 100 Gewichtsteile der Feststoffe des Silikonharzes (II) vorliegt.

14. Silikonbeschichtungszusammensetzung nach einem der Ansprüche 11 bis 13, wobei

(i) wenn die Silikonbeschichtungszusammensetzung auf eine Vinylcopolymerschicht auf einem organischen Harzsubstrat beschichtet und gehärtet wird, um einen gehärteten Film mit 3 bis 20 μm Dicke auszubilden, der gehärtete Film sogar nach Belichtung mit UV-Strahlung mit einer Intensität von 1 x $10^3$ W/m$^2$ für 500 Stunden rissbeständig ist,
und/oder
(ii) wenn die Silikonbeschichtungszusammensetzung auf einen Quarz aufgetragen und gehärtet wird, um einen gehärteten Film mit 5 μm Dicke auszubilden, der gehärtete Film eine Lichtdurchlässigkeit von zumindest 90 % in einem Wellenlängenbereich von 400 nm bis 700 nm aufweist.

15. Verfahren, umfassend das Herstellen einer Silikonbeschichtungszusammensetzung nach einem der Ansprüche 11 bis 14 durch Kombinieren der angegebenen Bestandteile davon.

16. Beschichteter Gegenstand, der ein Substrat und einen gehärteten Film einer UV-abschirmenden Silikonbeschichtungszusammensetzung nach einem der Ansprüche 11 bis 14 umfasst, der zumindest auf einer Oberfläche des Substrats, direkt oder mittels einer weiteren Schicht, aufgetragen ist.

17. Beschichteter Gegenstand nach Anspruch 16, wobei das Substrat ein organisches Harzsubstrat ist.

18. Beschichteter Gegenstand nach Anspruch 16, wobei der Gegenstand
ein organisches Harzsubstrat,
einen Grundierfilm, der auf zumindest einer Oberfläche des Substrats vorgesehen ist, wobei der Grundierfilm ein Vinylcopolymer mit einer UV-absorbierenden organischen Gruppe und einer Alkoxysilylgruppe an der Seitenkette umfasst, und
den gehärteten Film der UV-abschirmenden Silikonbeschichtungszusammensetzung nach einem der Ansprüche 11 bis 14 auf dem Grundierfilm umfasst.

**Revendications**

1. Dispersion aqueuse de particules d'oxyde de titane tétragonal du type coeur/gaine dans laquelle des particules en solution solide d'oxyde de titane tétragonal du type coeur/gaine constituées d'un coeur de taille nanométrique d'oxyde de titane tétragonal ayant de l'étain et du manganèse incorporés en une solution solide et une gaine d'oxyde de silicium autour du coeur sont dispersées dans un milieu de dispersion aqueux, et dans laquelle les coeurs ont un diamètre en distribution cumulée de 50 % en volume $D_{50}$ ne dépassant pas 30 nm, et les particules d'oxyde de titane du type coeur/gaine ont un diamètre en distribution cumulée de 50 % en volume $D_{50}$ ne dépassant pas 50 nm, comme mesuré par un procédé de dispersion de lumière dynamique utilisant une lumière laser, la quantité d'étain incorporée en solution solide donnant un rapport molaire du titane à l'étain (Ti/Sn) de 10/1 à 1000/1, et la quantité de manganèse incorporée en solution solide donnant un rapport molaire du titane au manganèse (Ti/Mn) de 10/1 à 1000/1.

**2.** Dispersion aqueuse de particules d'oxyde de titane tétragonal du type coeur/gaine selon la revendication 1, qui est exempte de tout dispersant autre que l'ammoniac, les hydroxydes, phosphates, hydrogénophosphates, carbonates et hydrogénocarbonates de métal alcalin.

**3.** Dispersion aqueuse de particules d'oxyde de titane tétragonal du type coeur/gaine selon la revendication 1 ou 2 qui, lorsqu'elle est ajustée à une concentration de 1 % en poids, donne un coefficient de transmission d'au moins 80 % quand il est mesuré par transmission d'une lumière ayant une longueur d'onde de 550 nm à travers une cellule en quartz ayant une longueur de trajet optique de 1 mm.

**4.** Procédé pour préparer des particules d'oxyde de titane tétragonal du type coeur/gaine, dans lequel des particules en solution solide d'oxyde de titane du type tétragonal de type coeur-gaine constituées d'un coeur de taille nanométrique d'oxyde de titane tétragonal ayant de l'étain et du manganèse incorporés en une solution solide et une gaine d'oxyde de silicium autour du coeur sont dispersées dans un milieu de dispersion aqueux, dans lequel les coeurs ont un diamètre en distribution cumulée de 50 % en volume $D_{50}$ allant jusqu'à 30 nm, et les particules d'oxyde de titane du type coeur/gaine ont un diamètre en distribution cumulée de 50 % en volume $D_{50}$ allant jusqu'à 50 nm, les deux mesurés par un procédé de dispersion de lumière dynamique utilisant une lumière laser, la quantité d'étain incorporée en solution solide est destinée à donner un rapport molaire du titane à l'étain (Ti/Sn) de 10/1 à 1000/1, et la quantité de manganèse incorporée en solution solide est destinée à donner un rapport molaire du titane au manganèse (Ti/Mn) de 10/1 à 1000/1, lequel procédé comprend les étapes consistant à :

(A) mélanger une dispersion de nanoparticules d'oxyde de titane tétragonal ayant de l'étain et du manganèse incorporés en une solution solide avec un alcool monovalent, de l'ammoniac, et un tétraalcoxysilane,
(B) chauffer rapidement le mélange de l'étape (A) pour former des particules en solution solide d'oxyde de titane tétragonal du type coeur/gaine constituées d'un coeur d'oxyde de titane tétragonal ayant de l'étain et du manganèse incorporés en une solution solide et une gaine d'oxyde de silicium autour du coeur,
(C) éliminer l'eau de la dispersion aqueuse de particules d'oxyde de titane tétragonal du type coeur/gaine de l'étape (B) pour concentrer la dispersion, et
(D) en éliminer l'ammoniac.

**5.** Procédé selon la revendication 4, dans lequel l'étape (A) comprend l'addition d'au plus 100 parties en poids de l'alcool monovalent à 100 parties en poids de la dispersion de nanoparticules d'oxyde de titane tétragonal ayant de l'étain et du manganèse incorporés en une solution solide.

**6.** Procédé selon la revendication 4 ou 5, dans lequel l'alcool monovalent utilisé dans l'étape (A) est au moins un membre choisi dans l'ensemble constitué par le méthanol, l'éthanol, le propanol et l'alcool isopropylique.

**7.** Procédé selon l'une quelconque des revendications 4 à 6, dans lequel le chauffage rapide de l'étape (B) est un chauffage en un temps de 10 minutes.

**8.** Procédé selon l'une quelconque des revendications 4 à 7, dans lequel l'étape (B) comprend un chauffage aux micro-ondes.

**9.** Procédé selon l'une quelconque des revendications 4 à 8, dans lequel l'étape (C) comprend une concentration sous la pression atmosphérique, une concentration sous vide, une ultrafiltration, ou une de leurs combinaisons.

**10.** Procédé selon l'une quelconque des revendications 4 à 9, dans lequel l'étape (D) utilise une résine échangeuse de cations pour l'élimination de l'ammoniac.

**11.** Composition de revêtement à base de silicone formant écran aux UV comprenant

(I) des particules d'oxyde de titane tétragonal du type coeur/gaine telles que définies dans la revendication 1, 2 ou 3,

(II) une résine siliconée obtenue par condensation (co)hydrolytique d'au moins un membre choisi dans l'ensemble constitué par un alcoxysilane de formule générale (1) :

$$(R^1)_m(R^2)_n Si(OR^3)_{4-m-n} \qquad (1)$$

dans laquelle chacun de $R^1$ et $R^2$ est indépendamment l'hydrogène ou un groupe hydrocarboné monovalent substitué ou non substitué, $R^1$ et $R^2$ peuvent être liés l'un à l'autre, $R^3$ est un alkyle en $C_1$ à $C_3$, chacun de m et n vaut 0 ou 1, m+n vaut 0, 1 ou 2,

un alcoxysilane de formule générale (2) :

$$Y[Si(R^4)_m(R^5)_n(OR^6)_{3-m-n}]_2 \qquad (2)$$

dans laquelle Y est un groupe organique divalent choisi dans l'ensemble constitué par alkylène en $C_1$ à $C_{10}$, perfluoroalkylène en $C_1$ à $C_{10}$, di(éthylène)perfluoroalkylène en $C_1$ à $C_{10}$, phénylène, et biphénylène, chacun de $R^4$ et $R^5$ est indépendamment l'hydrogène ou un groupe hydrocarboné monovalent substitué ou non substitué, $R^4$ et $R^5$ peuvent être liés l'un à l'autre, $R^6$ est un alkyle en $C_1$ à $C_3$, chacun de m et n vaut 0 ou 1, m+n vaut 0, 1 ou 2, et leurs condensats hydrolytiques partiels,

(III) un catalyseur de durcissement,

(IV) un solvant et, éventuellement,

(V) de la silice colloïdale,

les solides des particules d'oxyde de titane tétragonal de type coeur/gaine (I) étant présents en une quantité de 1 à 30 % en poids par rapport aux solides de la résine siliconée (II).

12. Composition de revêtement à base de silicone selon la revendication 11, dans laquelle le composant (III) est présent en une quantité suffisante pour durcir la résine siliconée (II), et le composant (IV) est présent en une quantité telle que la composition de revêtement à base de silicone puisse avoir une concentration de solides de 1 à 30 % en poids.

13. Composition de revêtement à base de silicone selon la revendication 11 ou 12, dans laquelle la silice colloïdale (V) est présente en une quantité de 5 à 100 parties en poids pour 100 parties en poids des solides de la résine siliconée (II).

14. Composition de revêtement à base de silicone selon l'une quelconque des revendications 11 à 13, dans laquelle

(i) quand la composition de revêtement à base de silicone est déposée sous forme de revêtement et durcie sur une couche de copolymère de vinyle sur un substrat de résine organique pour former un film durci ayant une épaisseur de 3 à 20 $\mu$m, le film durci est résistant aux craquelures même après exposition à un rayonnement UV à une intensité de $1 \times 10^3$ W/m$^2$ pendant 500 heures,

et/ou

(ii) quand la composition de revêtement à base de silicone est déposée sous forme de revêtement et durcie sur du quartz pour former un film durci ayant une épaisseur de 5 $\mu$m, le film durci a un coefficient de transmission de la lumière d'au moins 90 % dans une plage de longueurs d'onde allant de 400 nm à 700 nm.

15. Procédé comprenant la fabrication d'une composition de revêtement à base de silicone selon l'une quelconque des revendications 11 à 14, par combinaison de ses composants spécifiés.

16. Article revêtu comprenant un substrat et un film durci d'une composition de revêtement à base de silicone formant écran aux UV selon l'une quelconque des revendications 11 à 14, déposé sous forme de revêtement sur au moins une surface du substrat, directement ou via une autre couche.

17. Article revêtu selon la revendication 16, dans lequel le substrat est un substrat de résine organique.

18. Article revêtu selon la revendication 16, comprenant
un substrat de résine organique,
un film d'apprêt disposé sur au moins une surface du substrat, le film d'apprêt comprenant un copolymère de vinyle ayant un groupe organique absorbant les UV et un groupe alcoxysilyle sur la chaîne latérale, et
ledit film durci de la composition de revêtement à base de silicone formant écran aux UV selon l'une quelconque des revendications 11 à 14 sur le film d'apprêt.

# FIG.1

DIFFRACTION INTENSITY

(v)
(iii)
(vi)
(iv)
(ii)
(i)

DIFFRACTION ANGLE 2θ (°)

# FIG.2

TRANSMITTANCE (%)

——— EXAMPLE 1 (CS-i)

– – – EXAMPLE 2 (CS-ii)

········ EXAMPLE 4 (CS-iv)

– · – COMPARATIVE EXAMPLE 1 (CS-v)

– ·· – COMPARATIVE EXAMPLE 6 (CS-x)

WAVELENGTH (nm)

# FIG.3

# FIG.4

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- JP 2004238418 A
- JP 2783417 B
- JP H11310755 A
- JP 2000204301 A
- JP 4398869 B
- US 8158270 B
- JP 2003327431 A

- JP H10067516 A
- JP 2012077267 A
- JP 4836232 B
- JP 2008280465 A
- WO 2009148097 A
- JP 4041968 B

## Non-patent literature cited in the description

- *Science in China Series B: Chemistry,* 2008, vol. 51 (2), 179-185
- *Electrichimica Acta,* 1981, vol. 26, 435-443
- *Material Technology,* 2010, vol. 28 (5), 244-251

- *Journal of Materials Research,* 2010, vol. 25 (5), 890-898
- *J. Org. Chem.,* 1980, vol. 45, 1164
- *J. Org. Chem.,* 1999, vol. 64, 7707